# EUROPEAN PATENT APPLICATION

(11) **EP 4 439 802 A1**
(43) Date of publication of application: **02.10.2024**
(21) Application number: 22900682.0
(22) Date of filing: 02.12.2022
(51) Int. Cl.: H01M 10/6554, H01M 10/613

(54) **BATTERY PACK, METHOD FOR MANUFACTURING BATTERY PACK, AND ELECTRIC APPARATUS**

(30) Priority: 02.12.2021 CN 202111460132
(71) Applicant: Xiamen Ampack Technology Limited, Xiamen City, Fujian Province 361000 (CN)
(72) Inventor: PENG, Fanggui, Dongguan, Guangdong 523000 (CN); YANG, Dian, Dongguan, Guangdong 523000 (CN); HU, Chengdong, Dongguan, Guangdong 523000 (CN); YANG, Pengcheng, Dongguan, Guangdong 523000 (CN)
(74) Representative: Icosa
(86) International application number: PCT/CN2022/136212
(87) International publication number: WO 2023/098878

(57) **Abstract**

This application discloses a battery pack, an electric device having the battery pack, and a battery pack manufacturing method. The battery pack includes a housing assembly, a cell assembly, a first circuit board, a first heat sink, a first structural member, and a first insulator. The cell assembly is disposed in the housing assembly. The cell assembly includes a cell. The cell includes a cell housing, an electrode assembly disposed in the cell housing, and an electrode terminal connected to the electrode assembly and led out from the cell housing. The first circuit board is disposed in the housing assembly and connected to the electrode terminal. The first heat sink is disposed in the housing assembly. The first structural member is disposed between the first circuit board and the first heat sink. An outer surface of the first structural member is provided with an insulating material. At least a part of the first insulator is disposed between the first structural member and the first heat sink, and the first structural member and the first heat sink are bonded by the first insulator. The first insulatoris disposed between the first structural member and the first heat sink, and the first structural membe and the first heat sinkare bonded, thereby improving heat dissipation of the battery pack.

## Description

### TECHNICAL FIELD

This application relates to the field of energy storage technologies and in particular, to a battery pack, a battery pack manufacturing method, and an electric device.

### BACKGROUND

When a battery is in use, a circuit board in the battery will generate a large amount of heat. To avoid overheat of the battery, heat dissipation needs to be performed for the battery. Conventionally, a heat sink is provided between cells for heat dissipation. However, this method has limited heat dissipation effects for the circuit board.

### SUMMARY

In view of this, it is necessary to provide a battery pack and an electric device for improving heat dissipation of the circuit board.

An embodiment of this application provides a battery pack, including a housing assembly, a cell assembly, a first circuit board, a first heat sink, a first structural member, and a first insulator. The cell assembly is disposed in the housing assembly. The cell assembly includes a cell. Each cell includes a cell housing, an electrode assembly disposed in the cell housing, and an electrode terminal connected to the electrode assembly and led from the cell housing. The first circuit board is disposed in the housing assembly and connected to the electrode terminal. The first heat sink is disposed in the housing assembly. The first structural member is disposed between the first circuit board and the first heat sink. An outer surface of the first structural member is provided with an insulating material. At least a part of the first insulator is disposed between the first structural member and the first heat sink, and the first structural member and the first heat sink are bonded by the first insulator. The first insulator is disposed between the first structural member and the first heat sink, and the first structural member and the first heat sink are bonded, thereby improving heat dissipation of the battery pack.

Optionally, in some embodiments of this application, a fluid insulating material is injected into the battery pack and forms the first insulator after being solidified.

Optionally, in some embodiments of this application, the housing assembly, the cell assembly, the first circuit board, the first structural member, and the first heat sink are bonded by the first insulator. When the battery pack is subject to external impact, the first insulator can provide enhanced protection for the battery pack, and with better thermal conductivity, the first insulator helps improve heat dissipation of the battery pack.

Optionally, in some embodiments of this application, the first insulator covers part of the electrode terminal located outside the cell housing. This further secures the electrode terminal and improves heat dissipation of the electrode terminal.

Optionally, in some embodiments of this application, the cell housing includes a first section and a second section. The first section accommodates the electrode assembly. The second section is connected to the first section. The electrode terminal extends out of the second section. The first insulator covers at least a part of the second section, enhancing protection of the second section and improving heat dissipation of the cell housing.

Optionally, in some embodiments of this application, the housing assembly is provided with a first through-hole and a second through-hole. The first heat sink is provided with a first passage. The first passage connects the first through-hole and the second through-hole. The first heat sink dissipates heat from the first circuit board and the cell assembly, along the first passage and then through the first through-hole and the second through-hole to the outside. This improves heat dissipation of the first circuit board and the cell assembly, thereby cooling the battery pack.

Optionally, in some embodiments of this application, the first heat sink is provided with a first insulation portion. The first insulation portion is disposed between an inner surface of the housing assembly and the first heat sink. In this case, a gap between the housing assembly and the first heat sink can be filled up. This reduces the first insulator flowing between the housing assembly and the first heat sink, and also insulates the housing assembly and the first heat sink.

Optionally, in some embodiments of this application, the housing assembly includes a first housing body. The first housing body encloses a first space. The first heat sink is disposed in the first space. The first housing body includes a first wall, a second wall, a third wall, and a fourth wall. The first wall and the second wall are opposite to each other in a first direction. The third wall and the fourth wall are opposite to each other in a second direction. The first heat sink is connected to inner surfaces of the first wall, the second wall, the third wall, and the fourth wall.

Optionally, in some embodiments of this application, the first through-hole is provided on the first wall. The second through-hole is provided on the second wall.

Optionally, in some embodiments of this application, the cell assembly includes a plurality of cells. The plurality of cells are stacked along the first direction.

Optionally, in some embodiments of this application, the third wall is provided with a first region. The first region is provided with a first housing body insulator. The third wall and the first heat sink are bonded by the first housing body insulator. This can reduce the first insulator flowing through a gap between the first region and a first side wall when the first insulator is being injected along the first housing body that is placed upside down. The fourth wall is provided with a second region. The second region is provided with a second housing body insulator. The fourth wall and the first heat sink are bonded by the second housing body insulator. This can reduce the first insulator flowing through a gap between the second region and a second side wall when the first insulator is being injected along the first housing body that is placed upside down.

Optionally, in some embodiments of this application, the battery pack further includes a first insulation portion and a second insulation portion, the first insulation portion and the second insulation portion being compressible. The first insulation portion is disposed between the first wall and the first heat sink along the first direction. When the first insulation portion is in a compressed state, sealing of a gap between a third side wall and the first wall can be enhanced. The second insulation portion is disposed between the second wall and the first heat sink. When the first insulation portion is in a compressed state, sealing of a gap between a fourth side wall and the second wall can be enhanced.

Optionally, in some embodiments of this application, the first insulation portion includes foam. A surface of the foam attached to the first heat sink and the first wall is provided with adhesive and capable of being bonded to the first heat sink and the first wall.

Optionally, in some embodiments of this application, the second insulation portion includes foam. A surface of the foam attached to the first heat sink and the second wall is provided with adhesive and capable of being bonded to the first heat sink and the second wall.

Optionally, in some embodiments of this application, the battery pack further includes a connecting bracket. The housing assembly further includes a second housing body. A second circuit board is disposed in the second housing body. The first housing and the second housing are connected to the connecting bracket. The connecting bracket is disposed between the second circuit board and the first heat sink. This can reduce the risk of short circuit between the second circuit board and the first heat sink.

Optionally, in some embodiments of this application, the connecting bracket is provided with a bracket through-hole, and a second space is formed between the connecting bracket and the first heat sink. The bracket through-hole communicates with the second space. This helps implement heat dissipation on the second circuit board.

An embodiment of this application further provides a battery pack, including a housing assembly, a cell assembly, and two second heat sinks. The cell assembly is disposed in the housing assembly. The cell assembly includes a plurality of cells stacked in a first direction. The cell includes a cell housing, an electrode assembly disposed in the cell housing, and an electrode terminal connected to the electrode assembly and led from the cell housing. The two second heat sinks are disposed between adjacent cells. Each of the two second heat sinks includes a first part and a first groove. Along the first direction, a projection of the first part overlaps a projection of the cell housing at least partially. The first part is disposed between the cells that are adjacent along the first direction, and can perform heat dissipation on adjacent cells. Along the first direction, two first grooves are opposite to each other to form a second passage, so that the first insulator can be injected into the battery pack through a bottom of the cell.

Optionally, in some embodiments of this application, some of the cells are stacked along the first direction as the first row. Some of the cells are stacked along the first direction as the second row. The first row and the second row are arranged in a second direction that is perpendicular to the first direction. The second heat sinks include two first parts. One of the first parts is located between adjacent cells among first-row cells. The other one of the first parts is located between adjacent cells among second-row cells, and the first groove connects the two first parts. The two first parts are used to perform heat dissipation for the first-row cells and the second-row cells.

Optionally, in some embodiments of this application, the first groove is located between a cell housing of the first-row cells and a cell housing of the second-row cells.

Optionally, in some embodiments of this application, the cell housing includes a first section and a second section. The first section accommodates the electrode assembly. The second section is connected to the first section. The electrode terminal extends out of the second section. The second section includes a first sealing portion and a second sealing portion. The electrode terminal extends out of the first section through the first sealing portion. Along the first direction, an overlap is present between a projection of the first groove and a projection of the second sealing portion close to the first groove.

Optionally, in some embodiments of this application, the second sealing portion and the first groove close to the second sealing portion bend towards the same direction.

Optionally, in some embodiments of this application, the projection of the second sealing portion along a third direction and the projection of the first groove along a third direction are sapced from each other. The third direction is perpendicular to the first direction and the second direction.

Optionally, in some embodiments of this application, the second heat sink further includes a second part. The second part is connected to a side of the first part. The second part extends out of and bends towards adjacent cells. The second part is connected to the cell housing. The second part is set to be in contact connection with the cell housing, increasing an area of contact between the second heat sink and the cell housing. Heat is transferred through the cell housing to the second part and then to the first housing, so that the heat dissipation effects for the cells are improved.

Optionally, in some embodiments of this application, the second heat sink further includes two second parts disposed along the second direction. The second parts are connected to two sides of the cell housing disposed along the second direction. In this way, the second parts are present around the cell housing, further improving the heat dissipation effects for the cells.

Optionally, in some embodiments of this application, the second part and the electrode terminal are arranged along the third direction. Viewed from the third direction, the second part covers at least part of the cell housing.

Optionally, in some embodiments of this application, an elastic member is disposed between adjacent first parts. When a cell swells, the elastic member can be compressed to provide space for a swelling cell.

Optionally, in some embodiments of this application, the cell housing includes a first shell and a second shell. The first shell is connected to the second shell. The first shell and the second shell can be folded along a joint thereof, so that the first shell and the second shell fit together to form the first section, so as to enclose the electrode assembly. A perimeter of the first shell extends outwards to form a plurality of first extension portions. A perimeter of the second shell extends outwards to form a plurality of second extension portions. After the first shell and the second shell are folded along the joint, the first extension portions and the second extension portions fit together and are connected in a sealed manner to form the second section.

Optionally, in some embodiments of this application, a first insulator is further included. The first insulator is formed by a solidified fluid insulating material that is injected into the battery pack through the second passage. The first insulator improves heat dissipation of the battery pack.

An embodiment of this application further provides a battery pack, including a housing assembly, a cell assembly, a first circuit board, a first heat sink, a first electrical connection portion, and a first structural member. The cell assembly is disposed in the housing assembly and includes a plurality of cells stacked in a first direction. The cell includes a cell housing, an electrode assembly disposed in the cell housing, and an electrode terminal connected to the electrode assembly and led from the cell housing. The first circuit board is disposed in the housing assembly and connected to the electrode terminal. The first heat sink is connected to an inner surface of the housing assembly. The first electrical connection portion includes a first conductive portion and a first insulation portion, where the first conductive portion includes a first segment connected to the first circuit board and a second segment exposed on the first insulation portion. The first structural member includes a first main body disposed between the first circuit board and the first heat sink. The first structural member is provided with a first opening, and the first opening runs across surfaces of the first main body. The first electrical connection portion runs through the first opening and extends to a side of the first structural member away from the first circuit board. The first structural member is provided with a first protrusion, and the first protrusion is provided on an edge of the first opening. The second segment fits into the first protrusion. A bending part of the second segment is insulated by the first protrusion, reducing the risk of short circuit at the bending part of the second segment.

Optionally, in some embodiments of this application, at least a part of the first insulation portion is accommodated along the first protrusion, increasing the length of the first protrusion and further improving the insulation of the bending part of the second segment.

Optionally, in some embodiments of this application, the first heat sink is provided with a fourth opening. The first protrusion is disposed in the fourth opening. The first electrical connection portion runs through the fourth opening.

Optionally, in some embodiments of this application, the battery pack further includes a second circuit board. The first electrical connection portion is connected to the second circuit board through the fourth opening.

Optionally, in some embodiments of this application, the second circuit board includes a circuit board provided with a battery management system.

Optionally, in some embodiments of this application, the housing assembly includes a first wall and a second wall arranged along the first direction. The first wall is provided with a first through-hole. The second wall is provided with a second through-hole. The first heat sink is provided with a first passage. The first passage connects the first through-hole and the second through-hole. The first heat sink dissipates heat from the first circuit board and the cell assembly, along the first passage and then through the first through-hole and the second through-hole to the outside. This improves heat dissipation of the first circuit board and the cell assembly, thereby cooling the battery pack.

Optionally, in some embodiments of this application, the fourth opening is provided with a fourth insulator for closing the fourth opening, so that less first insulator will overflow the fourth opening when being injected.

Optionally, in some embodiments of this application, the first heat sink is provided with a plurality of first passages arranged in a second direction. The second direction is perpendicular to the first direction. A fourth protrusion is disposed in two outermost first passages arranged along the second direction. The fourth protrusion is in contact connection with the first protrusion. The first protrusion can be positioned, and then the first electrical connection portion is positioned. Moreover, a space can be reserved to facilitate injection of the fourth insulator.

An embodiment of this application further provides a battery pack, including a housing assembly, a cell assembly, a first circuit board, a first heat sink, and a first electrical connection portion. The cell assembly is disposed in the housing assembly. The cell assembly includes a plurality of cells stacked in a first direction. The cell includes a cell housing, an electrode assembly disposed in the cell housing, and an electrode terminal connected to the electrode assembly and led from the cell housing. The first circuit board is disposed in the housing assembly and connected to the electrode terminal. The first heat sink is connected to an inner surface of the housing assembly. The first electrical connection portion is welded to the first circuit board. The first electrical connection portion includes a first conductive portion and a first insulation portion. The first conductive portion includes a first segment and a second segment. The first segment is connected to the first circuit board. The second segment is exposed on the first insulation portion. The second segment includes a plurality of laminated slices. The first heat sink is configured to improve heat dissipation of the battery pack. The second segment is set to be in a flexible structure. This facilitates bending of the first electrical connection portion, reduces the length of an energy loop, and reduces a weight of the first electrical connection portion.

Optionally, in some embodiments of this application, the slice includes a flexible copper slice.

Optionally, in some embodiments of this application, the second segment includes a third structural member and a fourth structural member. The third structural member extends in a direction opposite to the third direction and bends along the second direction. The fourth structural member is connected to an end of the third structural member away from the first segment, and is folded in a direction opposite to to the first direction. The first direction is perpendicular to both the second direction and the third direction.

Optionally, in some embodiments of this application, a second circuit board is further included. The second circuit board is provided with a first connecting portion. An end of the fourth structural member away from the first segment protrudes from the first insulation portion and is configured for connection with the first connecting portion.

Optionally, in some embodiments of this application, the first heat sink is provided with a fourth opening. The first electrical connection portion runs through the fourth opening.

Optionally, in some embodiments of this application, the first electrical connection portion is connected to the second circuit board through the fourth opening.

Optionally, in some embodiments of this application, the second circuit board includes a circuit board provided with a battery management system.

Optionally, in some embodiments of this application, a first insulator is further included. Formed by a solidified fluid insulating material disposed in the housing assembly, the first insulator is disposed between the first heat sink and the cell housing. The first insulator is used to improve the heat dissipation of the battery pack.

An embodiment of this application further provides a battery pack, including a housing assembly, a cell assembly, a first circuit board, a first heat sink, and a first structural member. The housing assembly includes a first wall and a second wall arranged in a first direction. The cell assembly is disposed in the housing assembly. The cell assembly includes a plurality of cells stacked in a first direction. The cell includes a cell housing, an electrode assembly disposed in the cell housing, and an electrode terminal connected to the electrode assembly and led from the cell housing. The first circuit board is disposed in the housing assembly and connected to the electrode terminal. The first heat sink is connected to an inner surface of the housing assembly. The first structural member includes first main body a fourth protrusion attached to an edge of the first main body. The first main body is disposed between the first circuit board and the first heat sink. Along the first direction, the fourth protrusion is provided on a side of the first circuit board, and an overlap is present between a projection of the fourth protrusion and a projection of the first circuit board. The fourth protrusion defines a position where the first structural member is connected to the first circuit board, facilitating assembly.

Optionally, in some embodiments of this application, the projection of the first circuit board falls within the projection of the fourth protrusion along the first direction.

Optionally, in some embodiments of this application, the first circuit board is provided in a notch. At least one electrode terminal is connected to the first circuit board through the notch. The fourth protrusion covers at least part of the electrode terminal along the first direction.

Optionally, in some embodiments of this application, along the first direction, the projection of the fourth protrusion covers part of the electrode terminal located outside the cell housing, so that the electrode terminal can be insulated.

Optionally, in some embodiments of this application, some of the cells are stacked along the first direction as the first row. Some of the cells are stacked along the first direction as the second row. The first row and the second row are arranged in a second direction. The second direction is perpendicular to the first direction. The first circuit board is further provided with a second conductive sheet. The second conductive sheet connects two electrode terminals of two cells arranged along the second direction, and is configured to transfer current from the first row to the second row. The two electrode terminals pass through the notch.

Optionally, in some embodiments of this application, the projection of the fourth protrusion covers a projection of the second conductive sheet along the first direction, so as to insulate the second conductive sheet.

Optionally, in some embodiments of this application, the battery pack further includes a first electrical connection portion and a second electrical connection portion. The first electrical connection portion and the second electrical connection portion are welded to the first circuit board. The electrode terminal includes a first terminal and a second terminal, the first terminal and the second terminal being opposite in polarity. The first electrical connection portion is connected to one of the first terminal and the second terminal of the cell. The second electrical connection portion is connected to the other one of adjacent cells. The first terminal and the second terminal are connected to the first circuit board through the notch. The first main body covers a region where the first electrical connection portion is welded to the first circuit board. The first main body covers a region where the second electrical connection portion is welded to the first circuit board. A region where the second electrical connection portion is connected to the first circuit board is insulated.

Optionally, in some embodiments of this application, the projection of the fourth protrusion covers a part of the first terminal located outside the cell housing along the first direction, in order to insulate the first terminal.

Optionally, in some embodiments of this application, the projection of the fourth protrusion covers part of the second terminal located outside the cell housing along the first direction, so as to insulate the second terminal.

Optionally, in some embodiments of this application, the first circuit board is provided with a plurality of sets of holes. Each set of holes includes a first hole and a second hole. The first circuit board is provided with a plurality of first conductive sheets. A first terminal of one of adjacent cells runs through the first hole and a second terminal of the other one of the adjacent cells runs through the second hole. A welding portion of the first terminal and a welding portion of the second terminal are stacked and then welded to the first conductive sheet. A third protrusion is provided on a side of the first structural member facing the first circuit board. In a third direction, the third protrusion has a projection located between adjacent first conductive sheets arranged along the second direction and configured to position the first structural member, where the third direction is perpendicular to both the first direction and the second direction. Thus, a gap is left between the first structural member and the first circuit board to allow a first insulator to flow in.

Optionally, in some embodiments of this application, a first insulator is further included. The first insulator is formed by a solidified fluid insulating material disposed in the housing assembly. The first insulator is disposed between the first heat sink and the cell housing, and covers the first circuit board, the first structural member, and the electrode terminal. The first insulator is used to fix and insulate the first circuit board, the first structural member, and the electrode terminal.

An embodiment of this application further provides a battery pack, including a housing assembly, a cell assembly, a first circuit board, a first heat sink, a first structural member, and a first insulator. The cell assembly is disposed in the housing assembly. The cell assembly includes a plurality of cells. The cell includes a cell housing, an electrode assembly disposed in the cell housing, and an electrode terminal connected to the electrode assembly and led from the cell housing. The electrode terminal includes a welding portion. Welding portions of adjacent cells overlap. The first circuit board is disposed in the housing assembly and connected to the welding portion. The first heat sink is connected to an inner surface of the housing assembly. The first circuit board and the first heat sink are arranged along a third direction. The first structural member is disposed between the first circuit board and the first heat sink. An outer surface of the first structural member is provided with an insulating material, and the first structural member is provided with a fourth communicating hole. Along the third direction, an overlap is present between a projection of an overlapped part of the welding portions of adjacent cells and a projection of the fourth communicating hole. A first insulator is at least partially located between the first structural member and the first heat sink and inside the fourth communicating hole. The first insulator flows in between the first structural member and the first heat sink through the fourth communicating hole. The first insulator conducts heat to the first heat sink and improves heat dissipation of the battery pack.

Optionally, in some embodiments of this application, a fluid insulating material flows in between the first structural member and the first heat sink through the fourth communicating hole and forms the first insulator.

Optionally, in some embodiments of this application, the first circuit board is further provided with a plurality of first communicating holes. Along the third direction, the first communicating holes run through the first circuit board. The first communicating holes allow the first insulator to flow into the battery pack, improving the efficiency of injecting the first insulator into the battery pack.

Optionally, in some embodiments of this application, the electrode terminal includes a first terminal and a second terminal, the first terminal and the second terminal being opposite in polarity. One of the first terminal or the second terminal is a positive electrode terminal. The other one is a negative electrode terminal. The first circuit board is provided with a plurality of sets of holes. Each set of holes includes a first hole and a second hole, the first hole and the second hole being arranged along a first direction. The first hole and the second hole extend along a second direction. A first terminal of one of adjacent cells runs through the first hole and a second terminal of the other one of the adjacent cells runs through the second hole. A welding portion of the first terminal and a welding portion of the second terminal are stacked and then connected to the first circuit board. The first direction is perpendicular to both the second direction and the third direction.

Optionally, in some embodiments of this application, the first circuit board is provided with a plurality of first conductive sheets. The first conductive sheet is connected to the first circuit board and disposed along the first hole and the second hole. A first terminal of one of adjacent cells runs through the first hole and a second terminal of the other one of the adjacent cells runs through the second hole. A welding portion of the first terminal and the welding portion of the second terminal are stacked and then welded to the first conductive sheet.

Optionally, in some embodiments of this application, each set of holes further includes a third hole. Viewed along the third direction, the third hole is located between the first hole and the second hole. Along the third direction, a projection of the third hole falls within a projection of the first conductive sheet, allowing the first insulator to flow into the battery pack through the third hole.

Optionally, in some embodiments of this application, the housing assembly is provided with a first through-hole and a second through-hole. The first heat sink is provided with a first passage. The first passage connects the first through-hole and the second through-hole. The first heat sink dissipates heat from the first circuit board and the cell assembly, along the first passage and then through the first through-hole and the second through-hole to the outside. This improves heat dissipation of the first circuit board and the cell assembly, thereby cooling the battery pack.

Optionally, in some embodiments of this application, the projection of the fourth communicating hole along the third direction, a projection of the first communicating hole along the third direction are spaced from each other.

Optionally, in some embodiments of this application, the first insulator includes a potting compound.

An embodiment of this application further provides an electric device, including the battery pack according to any one of the foregoing embodiments.

An embodiment of this application further provides a battery pack manufacturing method. The method includes the following steps: mounting the cell, the first circuit board, and the first heat sink along the first housing, and connecting the first heat sink to the first housing; injecting a fourth insulator into an opening of the first heat sink to seal the first heat sink; placing the first housing upside down after the fourth insulator is solidified and injecting the first insulator; and after the first insulator is solidified, connecting a first electrical connection portion to a second circuit board and mounting a second housing on the first housing.

Optionally, in some embodiments of this application, the step of mounting a second housing on the first housing further includes injecting a third insulator to between the second circuit board and the second housing to cover the second circuit board.

In the foregoing battery pack, the first insulator is disposed in the housing assembly from a side of the cell assembly back away from the first heat sink and covers the first circuit board, the first structural member and the electrode terminal, and the housing assembly, the cell assembly, the first circuit board, the first structural member, and the first heat sink are bonded by the first insulator. Therefore, heat dissipation of the battery pack is improved.

### BRIEF DESCRIPTION OF DRAWINGS

FIG. 1 is a schematic structural diagram of a battery pack according to some embodiments.
FIG. 2 is a schematic structural diagram of a battery pack according to some embodiments from another angle of view.
FIG. 3 is a schematic structural diagram of a battery pack according to some embodiments from still another angle of view.
FIG. 4 is a schematic exploded view of a battery pack according to some embodiments.
FIG. 5 is a sectional view of the battery pack shown in FIG. 1 along III-III.
FIG. 6 is a schematic diagram of the battery pack shown in FIG. 5 provided with a first insulator.
FIG. 7 is a schematic structural diagram of a third wall according to some embodiments.
FIG. 8 is a schematic diagram of a second housing and a second circuit board according to some embodiments.
FIG. 9 is a schematic exploded view of a second housing and a second circuit board according to some embodiments.
FIG. 10 is a schematic structural diagram of a cell according to some embodiments.
FIG. 11 is a schematic structural diagram of a cell according to some embodiments from another angle of view.
FIG. 12 is a schematic exploded view of a cell according to some embodiments.
FIG. 13 is a schematic structural diagram of a plurality of cells according to some embodiments.
FIG. 14 is a schematic exploded view of a plurality of cells according to some embodiments.
FIG. 15 is a schematic structural diagram of a second heat sink according to some embodiments.
FIG. 16 is a schematic structural diagram of a plurality of cells according to some embodiments from another angle of view.
FIG. 17 is a schematic structural diagram of a cell and a first circuit board according to some embodiments.
FIG. 18 is a schematic structural diagram of a first circuit board according to some embodiments.
FIG. 19 is a schematic structural exploded view of a first circuit board according to some embodiments.
FIG. 20 is a schematic structural diagram of a first electrical connection portion according to some embodiments.
FIG. 21 is a schematic structural diagram of a battery pack in an open state according to some embodiments.
FIG. 22 is a schematic structural diagram of a first structural member according to some embodiments.
FIG. 23 is a schematic structural diagram of a cell, a first circuit board, and a first structural member according to some embodiments.
FIG. 24 is a schematic structural diagram of a cell, a first circuit board, and a first structural member according to some embodiments from another angle of view.
FIG. 25 is a schematic structural diagram of a battery pack according to some embodiments, from which a first housing and a second housing are removed.
FIG. 26 is a sectional view of a battery pack as shown in FIG. 25, from which a first housing and a second housing are removed along II-II.
FIG. 27 is a schematic structural diagram based on FIG. 23, where a first insulator is provided.
FIG. 28 is a sectional view of a battery pack according to another embodiment along III-III.
FIG. 29 is a schematic exploded view of the battery pack shown in FIG. 25, from which a first housing and a second housing are removed.

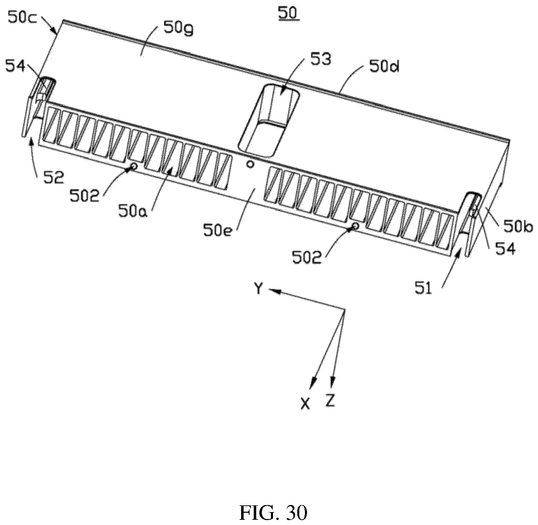

FIG. 30 is a schematic structural diagram of a first heat sink according to some embodiments.
FIG. 31 is a schematic structural diagram of a first heat sink according to some embodiments from another angle of view.
FIG. 32 is a schematic structural diagram of a first heat sink according to some embodiments from still another angle of view.
FIG. 33 is a schematic structural diagram of a first heat sink according to some embodiments from yet still another angle of view.
FIG. 34 is a schematic structural diagram of a first heat sink according to some embodiments from a viewing angle of a first direction.
FIG. 35 is a schematic structural diagram of a first structural member and a first heat sink according to some embodiments.
FIG. 36 is a schematic structural diagram of a first circuit board, a first structural member, and a first heat sink according to some embodiments.
FIG. 37 is a schematic structural diagram of a first heat sink according to some other embodiments.
FIG. 38 is a schematic exploded view of the first heat sink shown in FIG. 37.
FIG. 39 is a schematic structural diagram of a first heat sink according to some other embodiments.
FIG. 40 is a schematic structural diagram of a battery pack according to some other embodiments, from which a first housing and a second housing are removed.
FIG. 41 is a schematic structural diagram of a battery pack according to some embodiments, from which a fifth wall is removed.
FIG. 42 is a schematic structural diagram of a first housing and a cell assembly according to some embodiments.
FIG. 43 is a schematic structural diagram of an electric device according to an embodiment.
FIG. 44 is a schematic flowchart of a battery pack manufacturing method according to an embodiment.
FIG. 45 is a schematic flowchart of specific steps of the battery pack manufacturing method of FIG. 44 according to an embodiment.

### Reference signs of main components:

| | |
|---|---|
| Battery pack | 100 |
| Housing assembly | 10 |
| First through-hole | 10a |
| First sub through-hole | 101 |
| Second sub through-hole | 101b |
| Second through-hole | 10b |
| Second space | 10c |
| Sampling wire harness | 100a |
| First electrical connection portion | 100b |
| First conductive portion | 102 |
| First segment | 102a |
| First connecting protrusion | 1021 |
| Second connecting protrusion | 1022 |
| Slice | 1023 |
| Second segment | 102b |
| Third structural member | 1024 |
| Fourth structural member | 1025 |
| First insulation portion | 103 |
| Second electrical connection portion | 100c |
| First housing | 11 |
| First wall | 111 |
| Third connecting hole | 1111 |
| Second fastener | 1112 |
| Third fastener | 1113 |
| Fifth connecting hole | 1114 |
| Second wall | 112 |
| Third wall | 113 |
| First region | 113a |
| First connecting hole | 113b |
| First fastener | 113c |
| Fourth wall | 114 |
| Second region | 114a |
| Fifth wall | 115 |
| Second housing | 12 |
| Second housing recess | 12a |
| Bottom | 12a-1 |
| Side | 12a-2 |
| Connecting post | 121 |
| Second insulator | 122 |
| Third insulator | 123 |
| Fin | 124 |
| Second circuit board | 13 |
| First clearance | 13a |
| First surface | 13b |
| Second surface | 13c |
| First connecting portion | 131 |
| Second connecting portion | 132 |
| Connecting bracket | 14 |
| Bracket through-hole | 141 |
| Cell assembly | 20 |
| Cell | 21 |
| First row | 21a |
| Second row | 21b |
| First group of cells | 21c |
| First side face | 21c-1 |
| Second side face | 21c-2 |
| Third side face | 21c-3 |
| Cell housing | 211 |
| First section | 211a |
| First shell | 2111 |
| Second shell | 2112 |
| First extension portion | 2113 |
| Second extension portion | 2114 |
| First sealing portion | 2115 |
| Second sealing portion | 2116 |
| Second section | 211b |
| Electrode terminal | 212 |
| Welding portion | 212a |
| First terminal | 212b |
| Second terminal | 212c |
| Second heat sink | 22 |
| First part | 221 |
| Second clearance | 2211 |
| First groove | 221a |
| Second passage | 221b |
| Second part | 222 |
| First thermally conductive pad | 222a |
| Second structural member | 221c |
| First circuit board | 30 |
| First side | 301 |
| Second side | 302 |
| First notch | 301a |
| Second notch | 301b |
| Third notch | 301c |
| Fourth notch | 301d |
| Third region | 30d |
| Fourth region | 30e |
| Hole | 31 |
| First hole | 311 |
| Second hole | 312 |
| Third hole | 313 |
| First conductive sheet | 32 |
| Second conductive sheet | 33 |
| First communicating hole | 34 |
| Second communicating hole | 35 |
| Third communicating hole | 36 |
| First structural member | 40 |
| First main body | 40a |
| First opening | 41 |
| First protrusion | 42 |
| Second opening | 43 |
| Second protrusion | 44 |
| Fourth communicating hole | 45 |
| Third protrusion | 46 |
| Fourth protrusion | 47 |
| Third opening | 48 |
| First heat sink | 50 |
| First passage | 50a |
| First side wall | 50b |
| Second connecting hole | 501 |
| Fourth connecting hole | 502 |
| Second side wall | 50c |
| Third side wall | 50d |
| Fourth side wall | 50e |
| Bottom wall | 50f |
| Top wall | 50g |
| First insulation layer | 50h |
| Extension portion of third side wall | 50i |
| Second insulation layer | 501i |
| Extension portion of fourth side wall | 50j |
| Third insulation layer | 501j |
| Fourth insulation layer | 50k |
| Fourth opening | 51 |
| Fifth opening | 52 |
| Sixth opening | 53 |
| First insulation portion | 55 |
| Second insulation portion | 56 |
| Fifth protrusion | 57 |
| First spacing | 104 |
| Second spacing | 105 |
| Third spacing | 107 |
| Fourth spacing | 109 |
| First insulator | 60 |
| Third thermally conductive pad | 70 |
| Electric device | 200 |
| First direction | X |
| Second direction | Y |
| Third direction | Z |

This application will be further described with reference to the accompanying drawings in the following specific embodiments.

### DETAILED DESCRIPTION OF EMBODIMENTS

The following describes the technical solutions in the embodiments of this application with reference to the accompanying drawings in the embodiments of this application. Apparently, the described embodiments are only some rather than all of the embodiments of this application.

When one component is assumed as being "disposed on/in" another component, the component may be provided directly on/in the another component or with a component possibly present therebetween. When one component is assumed as being "connected to" another component, it may be attached to the another component directly or with a component possibly present therebetween.

Unless otherwise defined, all technical and scientific terms used herein shall have the same meanings as commonly understood by those skilled in the art to which this application pertains. The terms used herein in the specification of this application are for description of specific embodiments only without any intention to limit this application. The term "or/and" used herein includes any and all combinations of one or more associated items listed.

As can be understood, when the two elements are described as being arranged in parallel/perpendicular to each other, a tolerance of 0 to ±5% is allowed for an included angle between the two elements. For example, for two elements having a tolerance perpendicularly, one element is tilted towards or away from the other element with the tolerance between them ranging from 0° to 4.5° (inclusive). When projections of two elements are described as being identical or coinciding, a tolerance of 0 to ±10% is allowed between the two elements. For example, the projections of the two elements have the same shape with a tolerance of 0 to ±10%.

The following describes in detail some embodiments of this application with reference to the accompanying drawings. In absence of conflicts, the following embodiments and features in the embodiments may be combined.

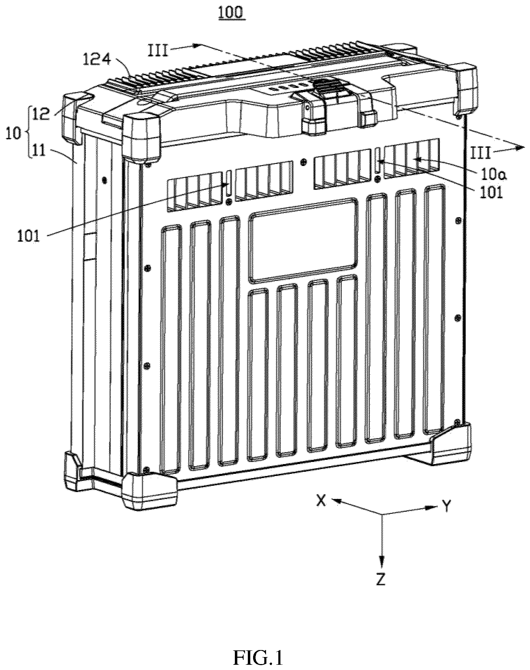

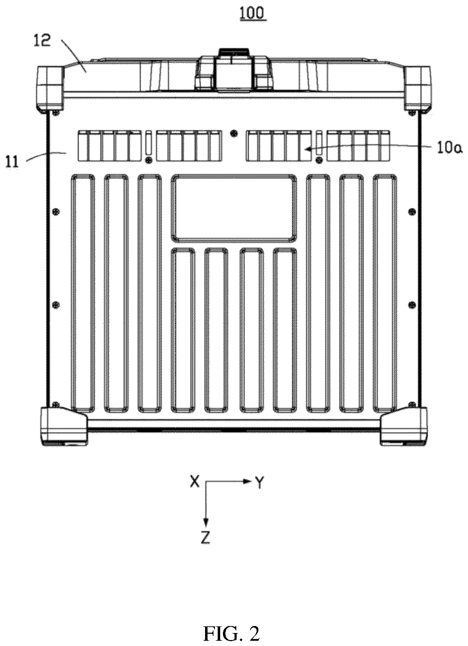

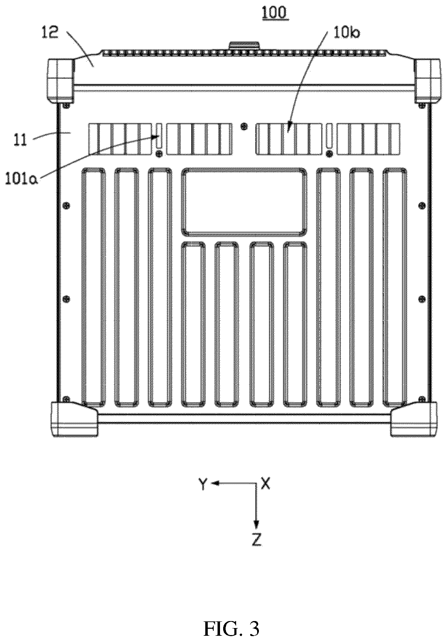

Referring to FIG. 1 to FIG. 6, an embodiment of this application provides a battery pack 100, including a housing assembly 10, a cell assembly 20, a first circuit board 30, a first structural member 40, and a first heat sink 50. The cell assembly 20 is disposed in the housing assembly 10. The first circuit board 30 is disposed in the housing assembly 10 and connected to the cell assembly 20. The first structural member 40 is disposed between the first circuit board 30 and the first heat sink 50. The housing assembly 10 is provided with a first through-hole 10a and a second through-hole 10b, and the first through-hole 10a and the second through-hole 10b communicate with the outside. The first heat sink 50 is provided with a first passage 50a, and the first passage 50a connects the first through-hole 10a and the second through-hole 10b. The first heat sink 50 dissipates heat from the first circuit board 30 and the cell assembly 20, along the first passage 50a and then through the first through-hole 10a and the second through-hole 10b to the outside. This improves heat dissipation of the first circuit board 30 and the cell assembly 20, thereby cooling the battery pack 100.

In an embodiment, the battery pack 100 can dissipate heat from the first circuit board 30 and the cell assembly 20 by virtue of flowing external air. In an embodiment, the battery pack 100 can be used on a device that is immobile when in use. When the battery pack 100 is immobile, heat dissipation can be performed by using natural wind or an external air cooling device. In an embodiment, the battery pack 100 can be used on a device that is mobile when in use, for example, a drone, an electric bicycle, or the like. When the device is moving, air flow speeds up, and therefore rapid heat dissipation of the battery pack 100 can be achieved.

In an embodiment, the housing assembly 10 includes a first housing 11 and a second housing 12, and the first housing 11 is connected to the second housing 12. The first housing 11 includes a first wall 111, a second wall 112, a third wall 113, a fourth wall 114, and a fifth wall 115. The first wall 111 and the second wall 112 are opposite to each other, and the third wall 113 and the fourth wall 114 are opposite to each other. The fifth wall 115 is disposed opposite to the second housing 12. The first wall 111 connects the third wall 113 and the fourth wall 114, the second wall 112 connects the third wall 113 and the fourth wall 114, and the fifth wall 115 connects the first wall 111, the second wall 112, the third wall 113 and the fourth wall 114, so as to form a first space. The first space is used to accommodate at least one of the cell assembly 20, the first circuit board 30, the first structural member 40, and the first heat sink 50. In an embodiment, the cell assembly 20, the first circuit board 30, the first structural member 40, and the first heat sink 50 are all accommodated along the first space. In another embodiment, the cell assembly 20, the first circuit board 30, and the first structural member 40 are accommodated along the first space, and the first heat sink 50 are partly accommodated along the first space. In still another embodiment, the cell assembly 20 is accommodated along the first space, while the cell assembly 20, the first circuit board 30, the first structural member 40, and the first heat sink 50 are disposed outside of the first space.

The structure of the battery pack 100 will be described more explicitly by introducing X, Y, and Z coordinate axes. The X, Y, and Z coordinate axes are perpendicular to each other, with the X direction as a first direction, Y direction as a second direction, and Z direction as a third direction. The first direction X is a direction in which the first wall 111 and the second wall 112 are opposite to each other. The second direction Y is a direction in which the third wall 113 and the fourth wall 114 are opposite to each other. The third direction Z is a direction in which the second housing 12 and the fifth wall 115 are opposite to each other. The first direction X is perpendicular to the second direction Y and the third direction Z.

The first through-hole 10a is provided on the first wall 111, and the second through-hole 10b is provided on the second wall 112.Along the first direction X, the first through-hole 10a runs through the first wall 111, and the second through-hole 10b runs through the second wall 112. The first heat sink 50 is connected to inner surfaces of the first wall 111, the second wall 112, the third wall 113, and the fourth wall 114, and the first passage 50a connects the first through-hole 10a and the second through-hole 10b. When the battery pack 100 moves opposite to the first direction X or an external air cooling device blows air along the first direction X, the first through-hole 10a serves as an air inlet, and the second through-hole 10b serves as an air outlet. The air enters the first through-hole 10a, flows through the first passage 50a, and leaves the second through-hole 10b, improving heat dissipation. It can be understood that when the battery pack 100 moves opposite to the first direction X or an external air cooling device blows air along the first direction X, the first through-hole 10a serves as the air outlet, and the second through-hole 10b serves as the air inlet. Optionally, the first through-hole 10a may alternatively be provided on the third wall 113, and the second through-hole 10b may alternatively be provided in the fourth wall 114. Optionally, the second through-hole 10b is provided on the second wall 112, and the first through-hole 10a may alternatively be provided on the third wall 113.

In an embodiment, a projection of the first through-hole 10a along the first direction X overlaps a projection of the second through-hole 10b along the first direction X. It can be understood that, the projection of the first through-hole 10a along the first direction X partially overlaps the projection of the second through-hole 10b along the first direction X, or the projection of the first through-hole 10a along the first direction X completely covers the projection of the second through-hole 10b along the first direction X, or the projection of the second through-hole 10b completely covers the projection of the first through-hole 10a. In a specific implementation of this application, the projection of the first through-hole 10a along the first direction X is larger than and covers the projection of the second through-hole 10b along the first direction X. When the battery pack 100 moves opposite to the first direction X or an external air cooling device blows air along the first direction X, the first through-hole 10a serves as an air inlet, and the second through-hole 10b serves as an air outlet. The diameter of the first through-hole 10a is larger than that of the second through-hole 10b, further improving heat dissipation.

In an embodiment, the battery pack 100 further includes a first insulator 60. The first insulator 60 bonds together the housing assembly 10, the cell assembly 20, the first circuit board 30, the first structural member 40, and the first heat sink 50. When the battery pack 100 is subject to external impact, the first insulator 60 can provide enhanced protection for the battery pack 100. Optionally, the first insulator 60 has good thermal conductivity, helping improve heat dissipation of the battery pack 100. The thermal conductivity coefficient of the first insulator 60 is B, where 0.8 w/mk<B<3.0 w/mk.

In an embodiment, a fluid insulating material is injected into the battery pack 100 and forms the first insulator 60 after being solidified. Optionally, the first insulator 60 includes one of a potting compound, polystyrene foam, and a binder. Optionally, the first insulator 60 includes resin. After being heated to melt, the fluid resin is applied on the battery pack 100 through pouring and solidification. Optionally, the first insulator 60 includes the potting compound. The fluid potting compound is applied on the battery pack 100 through pouring and then solidified. Hardness of a solidified potting compound is 55-70A. An applicable temperature range of the potting compound is 40°C to 120°C. Therefore, the temperature may be any one of 40°C, 50°C, 60°C, 70°C, 80°C, 90°C, 100°C, 110°C, and 120°C. In an embodiment, the cell assembly 20, the first circuit board 30, the first structural member 40, and the first heat sink 50 are mounted along the first housing 11, the first heat sink 50 is connected to the first housing 11, the first housing 11 is placed upside down, the fluid resin or potting compound is injected into the battery pack 100, the first housing 11 is placed back to normal, and the first heat sink 50, the first structural member 40, and the first circuit board 30 are arranged sequentially. Optionally, the fluid resin or potting compound is injected, along the third direction Z, into the battery pack 100 through the bottom of the cell assembly 20.

In an embodiment, the cell assembly 20 includes a cell 21. The cell 21 includes a cell housing 211, an electrode assembly 213 disposed in the cell housing 211, and an electrode terminal 212 connected to the electrode assembly 213 and led out from the cell housing 211. In an embodiment, the cell housing 211 includes a first section 211a and a second section 211b. The first section 211a accommodates the electrode assembly 213, the second section 211b is connected to the first section 211a, and the electrode terminal 212 extends out of the second section 211b. Optionally, the first insulator 60 is disposed between the first heat sink 50 and the cell housing 211, and covers the first circuit board 30, the first structural member 40, and part of the cell assembly 20.

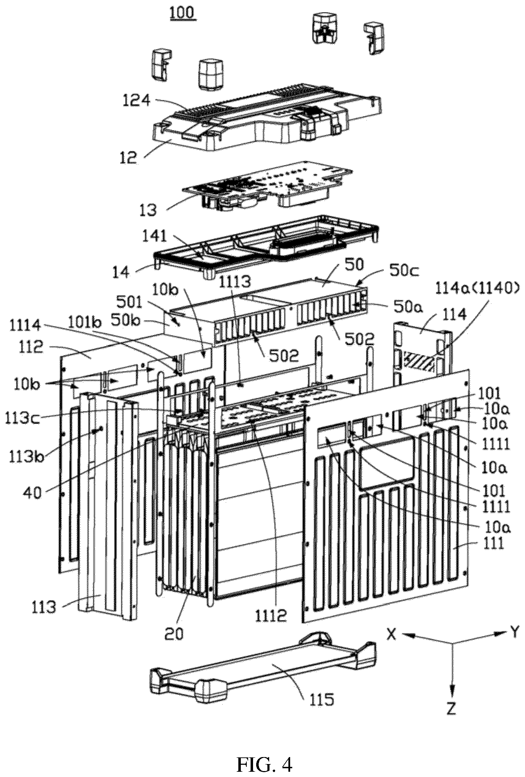

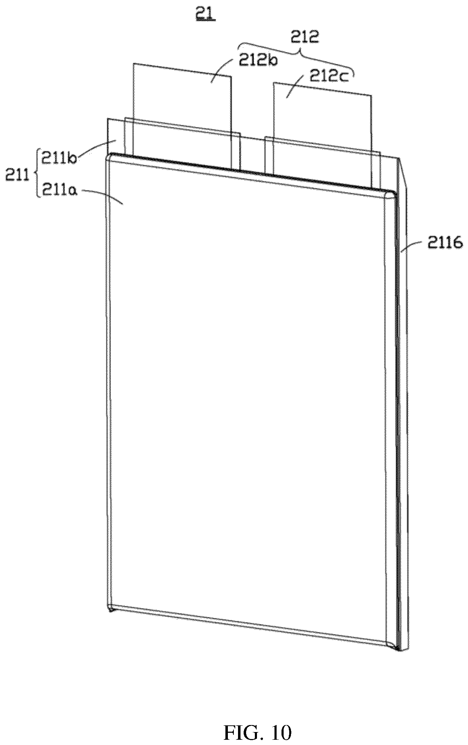

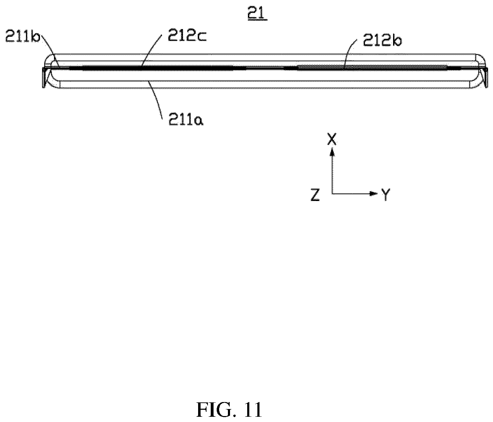

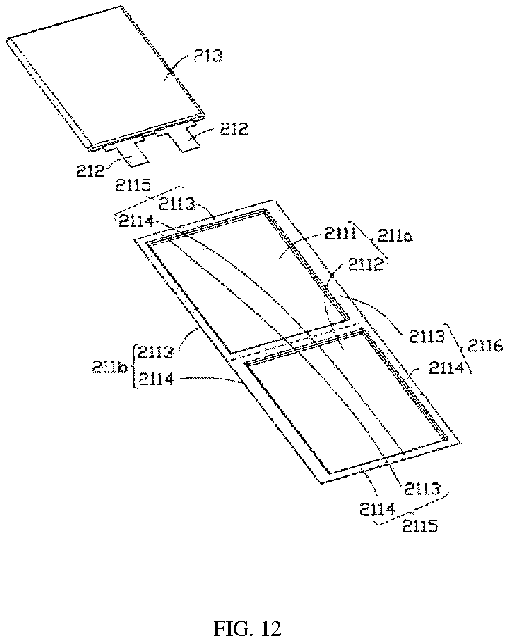

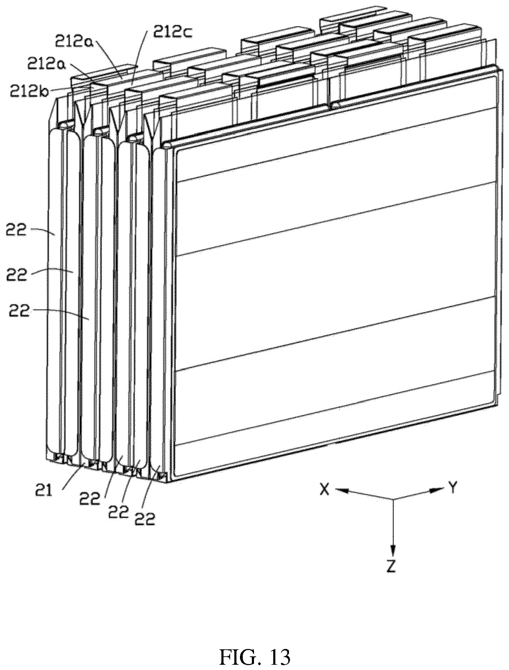

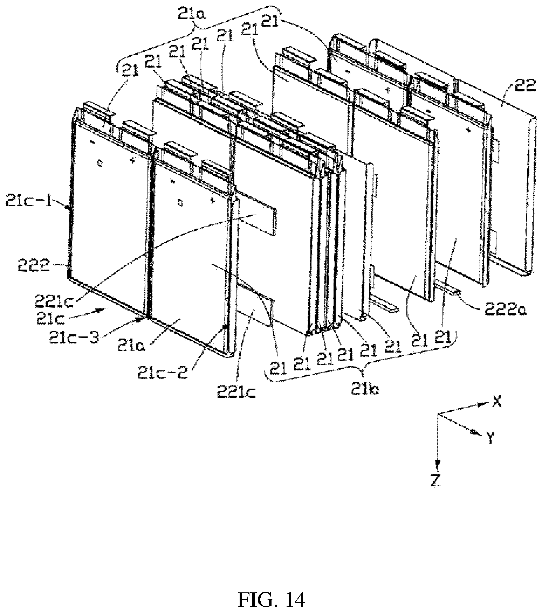

Referring to FIG. 4, FIG. 10, FIG. 11, FIG. 12, FIG. 13, and FIG. 14, in an embodiment, the cell housing 211 includes a first shell 2111 and a second shell 2112, where the first shell 2111 is connected to the second shell 2112. The first shell 2111 and the second shell 2112 can be folded along a joint thereof, so that the first shell 2111 and the second shell 2112 fit together to form the first section 211a, so as to enclose the electrode assembly 213. A perimeter of the first shell 2111 extends outwards to form a plurality of first extension portions 2113. A perimeter of the second shell 2112 extends outwards to form a plurality of second extension portions 2114. After the first shell 2111 and the second shell 2112 are folded along a connection position, the first extension portions 2113 and the second extension portions 2114 fit together and are connected in a sealed manner to form the second section 211b. The second section 211b includes a first sealing portion 2115 and a second sealing portion 2116. The first sealing portion 2115 is disposed opposite the connection position. The electrode terminal 212 extends out of the first section 211a through the first sealing portion 2115. Optionally, the second section 211b includes two second sealing portions 2116 disposed opposite to each other along the second direction Y. Optionally, the second section 211b includes one first sealing portion 2115. The cell 21 includes two electrode terminals 212, and the two electrode terminals 212 extend out of the cell housing 211 through the first sealing portion 2115. In another embodiment, the first shell 2111 and the second shell 2112 are separated. The second section 211b includes two first sealing portions 2115 disposed opposite to each other along the third direction Z. The cell 21 includes two electrode terminals 212. One electrode terminal 212 extends out of the cell housing 211 through one first sealing portion 2115, and the other electrode terminal 212 extends out of the cell housing 211 through the other first sealing portion 2115. The two electrode terminals 212 are opposite to each other along the third direction Z.

In an embodiment, the first insulator 60 covers part of the electrode terminal 212 located outside the cell housing 211. This further secures the electrode terminal 212 and improves heat dissipation of the electrode terminal 212.

In an embodiment, the first insulator 60 covers part of the electrode terminal 212 outside the cell housing 211 and at least a part of the first sealing portion 2115. This enhances protection of the first sealing portion 2115 and improves heat dissipation of the cell housing 211.

In an embodiment, the electrode assembly 213 includes a winding structure formed by a positive electrode plate, a negative electrode plate, and a separator. In some other embodiments, the electrode assembly 213 may alternatively be a laminated structure. In other words, the positive electrode plate, the negative electrode plate, and the separator are laminated sequentially to form one unit of electrode assembly 213, and a plurality of units of electrode assembly 213 are further laminated into the electrode assembly 213. Optionally, the cell housing 211 includes an aluminum plastic film. Optionally, the cell 21 includes a soft package cell. Optionally, the cell assembly 20 includes a plurality of cells 21 stacked along the first direction X. Optionally, the cell assembly 20 includes a plurality of cells 21, where some of the cells 21 are stacked along the first direction X as a first row 21a, some of the cells 21 are stacked along the first direction X as a second row 21b, and the first row 21a and the second row 21b are arranged along the second direction Y. The first row 21a at least includes a cell 21a-1 and a cell 21a-2 arranged sequentially. The second row 21b at least includes a cell 21b-1 and a cell 21b-2. The cells 21a-1 and 21b-1 are arranged along the second direction Y, and the cells 21a-2 and 21b-2 are arranged along the second direction Y. Optionally, the cell assembly 20 includes a plurality of cells 21, and the plurality of cells 21 are stacked along the first direction X as a first row 21a. The cell assembly 20 includes only one row of cells. Optionally, the first row 21a may further include a cell 21a-3, a cell 21a-4, a cell 21a-5, a cell 21a-6, and a cell 21a-7. Optionally, the second row 21b may further include a cell 21b-3, a cell 21b-4, a cell 21b-5, a cell 21b-6, and a cell 21b-7.

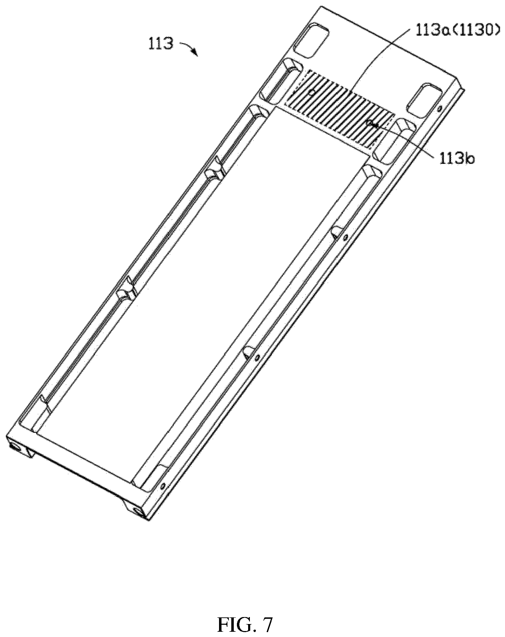

Referring to FIG. 4 and FIG. 7, optionally, the third wall 113 is provided with a first region 113a, and the first region 113a has a first housing insulator 1130. The first heat sink 50 is provided with a first side wall 50b and a second side wall 50c that are opposite to each other along the second direction Y. The third wall 113 is connected to the first side wall 50b. The first housing insulator 1130 is disposed between the first region 113a and the first side wall 50b. The first housing insulator 1130 is disposed in a gap between the first region 113a and the first side wall 50b. In this case, when the first insulator 60 is being injected along the first housing 11 that is placed upside down, the flow of the first insulator 60 in the gap between the first region 113a and the first side wall 50b can be reduced. Optionally, the first housing insulator 1130 is thermally conductive, and can transfer the heat from the first heat sink 50 to the third wall 113. Optionally, the first housing insulator 1130 includes adhesive. Optionally, the adhesive includes thermally conductive adhesive. Optionally, a thermally conductivity coefficient of the thermally conductive adhesive is A, where 2.5 w/mk<A≤5.0 w/mk. Optionally, the first housing insulator 1130 can also prevent external impurities and dust from entering the cell assembly 20.

Optionally, the fourth wall 114 is provided with a second region 114a, and the second region 114a has a second housing insulator 1140. The fourth wall 114 is connected to a second side wall 50c. The second housing insulator 1140 is disposed between the second region 114a and the second side wall 50c, so as to connect the first heat sink 50 and the fourth wall 114. The second housing insulator 1140 is disposed in a gap between the second region 114a and the second side wall 50c. In this way, when the first insulator 60 is being injected along the first housing 11 that is placed upside down, the flow of the first insulator 60 in the gap between the second region 114a and the second side wall 50c can be reduced. Optionally, the second housing insulator 1140 is thermally conductive, and can transfer the heat from the first heat sink 50 to the fourth wall 114. Optionally, the second housing insulator 1140 includes adhesive. Optionally, the adhesive includes thermally conductive adhesive. Optionally, a thermally conductivity coefficient of the thermally conductive adhesive is A, where 2.5 w/mk<A≤5.0 w/mk. Optionally, the second housing insulator 1140 can also prevent external impurities and dust from entering the cell assembly 20.

Further, the third wall 113 is provided with a first connecting hole 113b, and the first side wall 50b is provided with a second connecting hole 501. A first fastener 113c runs through the first connecting hole 113b and the second connecting hole 501, and fastens the first heat sink 50 to the third wall 113.

In an embodiment, a first through-hole 10a and a second through-hole 10b are provided in plurality and are the same in quantity. Along the first direction X, an overlap is present between a projection of the first through-hole 10a and a projection of the second through-hole 10b. The battery pack 100 includes a second fastener 1112. Optionally, the plurality of first through-holes 10a are spaced apart. A third connecting hole 1111 is provided between adjacent first through-holes 10a, and the first heat sink 50 is provided with a fourth connecting hole 502. An overlap is present between a projection of the third connecting hole 1111 along the first direction X and a projection of the fourth connecting hole 502 along the first direction X. The second fastener 1112 is disposed along the third connecting hole 1111 and the fourth connecting hole 502 and is configured to connect the first heat sink 50 and the first wall 111. Optionally, a first sub through-hole 101 is disposed between adjacent first through-holes 10a. An overlap is present between a projection of the first sub through-hole 101 along the first direction X and a projection of a first passage 50a along the first direction X. This can increase air input or air output of the first passage 50a and improve heat dissipation. Optionally, An overlap is present between the projection of the first sub through-hole 101 along the third direction Z and the projection of the third connecting hole 1111 along the third direction Z. The first sub through-hole 101 and the third connecting hole 1111 are disposed between adjacent first through-holes 10a, so that an area of the first wall 111 can be utilized for improving the heat dissipation efficiency.

The battery pack 100 includes a third fastener 1113. Optionally, the plurality of second through-holes 10b are spaced apart. A fifth connecting hole 1114 is provided between adjacent second through-holes 10b, and the fourth connecting hole 502 is provided on a side of the first heat sink 50 connected to the second wall 112. An overlap is present between a projection of the fifth connecting hole 1114 along the first direction X and the projection of the fourth connecting hole 502 along the first direction X. The third fastener 1113 is disposed in the fifth connecting hole 1114 and the fourth connecting hole 502, and is configured to connect the first heat sink 50 and the second wall 112. Optionally, a second sub through-hole 101b is disposed between adjacent second through-holes 10b. An overlap is present between a projection of the second sub through-hole 101b along the first direction X and the projection of the first passage 50a a projection of the second sub through-hole 101b along the first direction X. This can increase air input or air output of the first passage 50a and improves heat dissipation. Optionally, an overlap is present between the projection of the second sub through-hole 101b along the third direction Z and the projection of the fifth connecting hole 1114 along the third direction Z. The second sub through-hole 101b and the third connecting hole 1114 are disposed between adjacent second through-holes 10a, so that an area of the second wall 112 can be utilized for improving the heat dissipation efficiency.

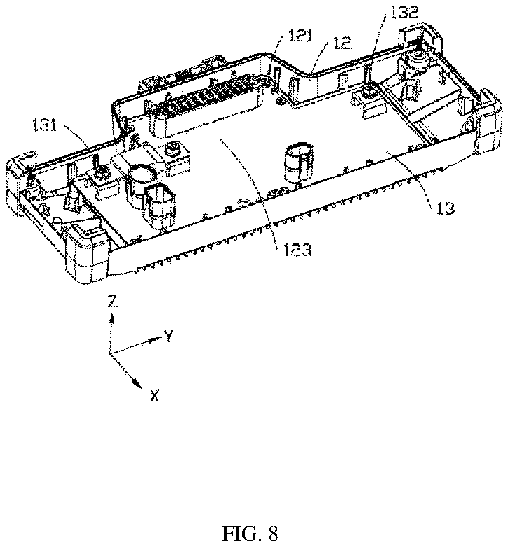

Referring to FIG. 4, FIG. 8, and FIG. 9, in an embodiment, the battery pack 100 further includes a second circuit board 13. The second housing 12 is provided with a second housing recess 12a. The second circuit board 13 is disposed along the second housing recess 12a and is insulated from the second housing 12. The second circuit board 13 is provided with a first connecting portion 131 and a second connecting portion 132, and the first connecting portion 131 and the second connecting portion 132 are electrically connected to the first circuit board 30. Optionally, the second circuit board 13 may be a circuit board provided with a battery management system, which is configured to intelligently manage and maintain all battery units to reduce overcharge and over-discharge of batteries, prolong the service life of the batteries, and monitor the state of the batteries.

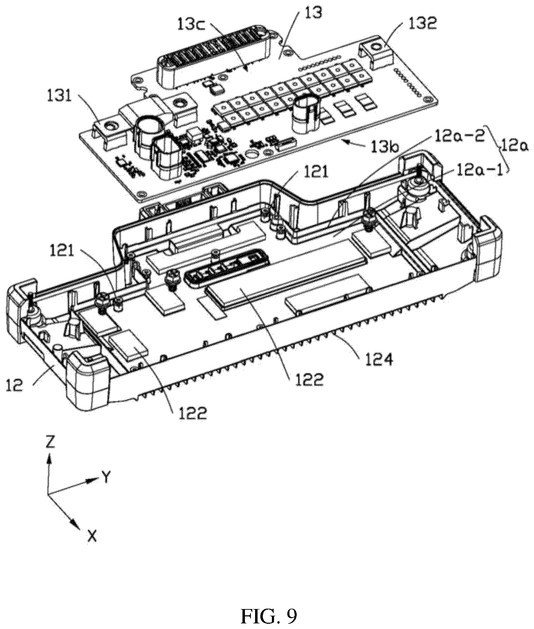

In an embodiment, referring to FIG. 9, the second housing 12 is provided with the second housing recess 12a. The second circuit board 13 is disposed in the second housing recess 12a. Optionally, the second housing recess 12a includes a bottom part 12a-1 and a side part 12a-2, and the side part 12a-2 is connected to an edge of the bottom part 12a-1. The bottom part 12a-1 is provided with a plurality of connecting posts 121. The second circuit board 13 is connected to one end of the plurality of connecting posts 121 away from the bottom part 12a-1. A first clearance 13a is provided between the second circuit board 13 and the bottom part 12a-1. Optionally, a second insulator 122 is provided between the second circuit board 13 and the bottom part 12a-1, allowing the second circuit board 13 and the second circuit board 13 to be insulated from the second housing 12. The second insulator 122 includes foam. Optionally, a third insulator 123 is disposed in the first clearance 13a, and the third insulator 123 covers the second circuit board 13. Optionally, the second circuit board 13 includes a first surface 13b and a second surface 13c arranged along the third direction Z. Along the third direction Z, the third insulator 123 may be disposed between the first surface 13b and the bottom part 12a-1, so as to insulate the second circuit board 13 from the second housing 12 and reduce impurities entering between the second circuit board 13 and the second housing 12. Optionally, along the third direction Z, the third insulator 123 covers the second surface 13c, so as to further insulate the second circuit board 13 from the second housing 12 and further reduce impurities entering between the second circuit board 13 and the second housing 12. Optionally, the third insulator 123 is disposed in a gap between the second circuit board 13 and the second housing recess 12a, so as to further strengthen insulating the second circuit board 13 from the second housing 12, reduce the risk of short circuit between the second circuit board 13 and the second housing 12, and further reduce impurities entering between the second circuit board 13 and the second housing 12.

Optionally, viewed along the third direction Z, the connecting portion 131 and the second connecting portion 132 protrude from a surface of the third insulator 123, facilitating electrical connection with the first circuit board 30 during assembly. Optionally, the third insulator 123 includes one of a potting compound, polystyrene foam, and a binder. Optionally, the third insulator 123 includes resin. After being heated and melted, the fluid third insulator 123 is applied on the second housing recess 12a through pouring and solidification. Optionally, the third insulator 123 includes a potting compound. Hardness of a solidified potting compound is 40 to 50A, which may be any one of 41A, 42A, 43A, 44A, 45A, 46A, 47A, 48A, 49A, or 50A. An applicable temperature range of the potting compound is 40°C to 200°C. Therefore, the temperature may be any one of 40°C, 50°C, 60°C, 70°C, 80°C, 90°C, 100°C, 110°C, 120°C, 130°C, 140°C, 150°C, 160°C, 170°C, 180°C, 190°C, or 200°C.

In an embodiment, the battery pack 100 further includes a connecting bracket 14. The first housing 11 and the second housing 12 are connected to the connecting bracket 14. The connecting bracket 14 is disposed between the second circuit board 13 and the first heat sink 50. This can reduce the risk of short circuit between the second circuit board 13 and the first heat sink 50. Optionally, the connecting bracket 14 is made of an insulating material.

In an embodiment, a second space 10c is formed between the connecting bracket 14 and the first heat sink 50, the connecting bracket 14 is provided with a bracket through-hole 141, and the bracket through-hole 141 communicates with the second space 10c. This facilitates heat dissipation of the second circuit board 13.

In an embodiment, the first housing 11 and the second housing 12 include a thermally conductive material, so that the heat dissipation performance is improved. Optionally, the first housing 11 and the second housing 12 include a metal thermally conductive material and a thermally conductive insulating material. The insulating material may cover an outer surface of the metal thermally conductive material. Optionally, the metal thermally conductive material of the first housing 11 and the second housing 12 includes aluminum. Optionally, an exterior wall of the second housing 12 is provided with fins 124, and the fins 124 are arranged along the second direction Y and connected to the second housing 12, so as to further improve the heat dissipation performance.

In an embodiment, the cell 21 is in contact connection with the first housing 11, and the heat from the cell 21 is dissipated to the outside through the first housing 11.

In an embodiment, the electrode terminal 212 is provided with a welding portion 212a that extends out of the cell housing 211, where the welding portion 212a is formed by bending the electrode terminal 212. The electrode terminals 212 of adjacent cells 21 bend towards each other and are connected to the first circuit board 30. In an embodiment, the electrode terminal 212 includes a first terminal 212b and a second terminal 212c, the first terminal 212b and the second terminal 212c being opposite in polarity. One of the first terminal 212b or the second terminal 212c is a positive electrode terminal, and the other one is a negative electrode terminal. A projection of the welding portion 212a of the first terminal 212b of a cell 21 along the third direction Z overlaps a projection of the welding portion 212a of the second terminal 212c of an adjacent cell 21 along the third direction Z at least partially. The first terminal 212b and the second terminal 212c of adjacent cells bend towards each other, and the welding portion 212a of the first terminal 212b and the welding portion 212a of the second terminal 212c are stacked and connected. The welding portions 212a of adjacent cells 21 are connected with each other and connected to the first circuit board 30, so as to reduce processing steps.

In another embodiment, a projection of the first terminal 212b of a cell 21 along the third direction Z overlaps a projection of the first terminal 212b of an adjacent cell 21 along the third direction Z at least partially. The first terminals 212b are connected to the first circuit board 30, implementing a parallel connection of the cells 21.

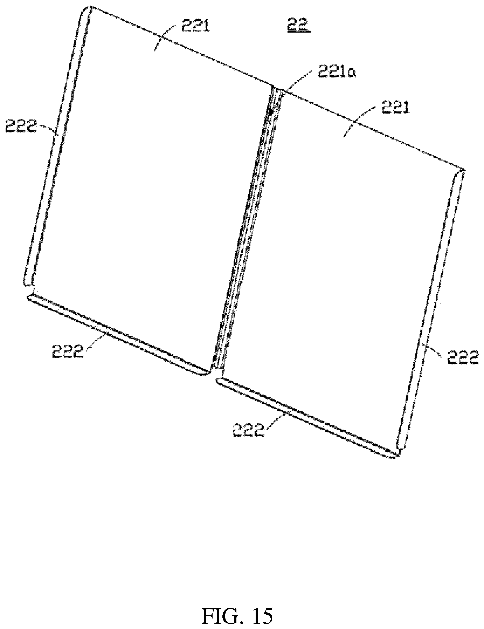

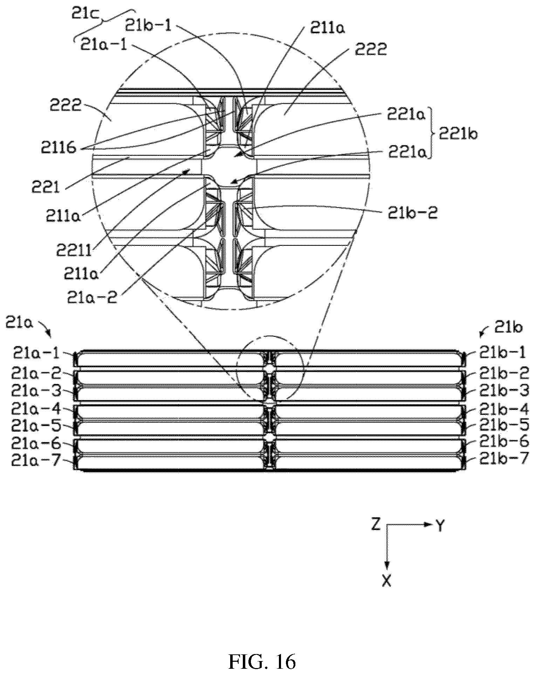

Referring to FIG. 4, FIG. 13, FIG. 14, FIG. 15, and FIG. 16, in an embodiment, the cell assembly 20 further includes a plurality of second heat sinks 22, and the second heat sinks 22 are disposed between adjacent cells 21. Optionally, the second heat sink 22 is in contact connection with the cells 21 to perform heat dissipation of the cells 21. Optionally, the second heat sink 22 is in contact connection with the first housing 11 to transfer heat from the cells 21 to the first housing 11, so that the first housing 11 is used for heat dissipation of the cells 21.

In an embodiment, the second heat sink 22 includes a first part 221. The first part 221 is disposed between adjacent cells 21 along the first direction X, so that heat dissipation can be performed for adjacent cells 21. A projection of the first part 221 along the first direction X overlaps a projection of the cell housing 211 along the first direction X at least partially. Optionally, along the first direction X, the projection of the first part 221 falls within the projection of the cell housing 211.

In an embodiment, the first part 221 covers a cell 21a-1 and is provided with a first groove 221a. An overlap is present between a projection of the first groove 221a along the first direction X and a projection of the cell housing 211 of the cell 21a-1 along the first direction X. The first groove 221a is located on the same side as one second sealing portion 2116. Optionally, an overlap is present between the projection of the first groove 221a along the first direction X and a projection of the second sealing portion 2116 of the cell 21a-1 along the first direction X. Optionally, the second sealing portion 2116 of the cell 21a-1 is set to bend towards a direction away from the first groove 221a. The projection of the second sealing portion 2116 along he third direction Z and the projection of the first groove 221a along the third direction Z are spaced apart from each other. Optionally, the first groove 221a is in contact connection with the cell housing 211 of the cell 21a-1, so that heat dissipation of the cell 21a-1 can be improved. Optionally, through the first groove 221a, the fluid resin or potting compound can be easily injected into the battery pack 100 along the third direction Z from the bottom of the cell 21 to form a first insulator 60, alleviating adhesion between the fluid resin or potting compound and the first part 221 during injection.

In an embodiment, the first part 221 is provided with a first groove 221a. An overlap is present between a projection of the first groove 221a along the first direction X and a projection of the cell housing 211 of the cell 21a-2 along the first direction X. The first groove 221a is located on the same side as one second sealing portion 2116. Optionally, an overlap is present between the projection of the first groove 221a along the first direction X and a projection of the second sealing portion 2116 of the cell 21a-2 along the first direction X. Optionally, the second sealing portion 2116 of the cell 21a-2 is set to bend towards a direction away from the first groove 221a. the projection of the second sealing portion 2116 along the third direction Z and the projection of the first groove 221a along the third direction Z are spaced fromeach other. Optionally, the first groove 221a is in contact connection with the cell housing 211 of the cell 21a-2, so that heat dissipation of the cell 21a-2 can be improved. Optionally, through the first groove 221a, the fluid resin or potting compound can be easily injected into the battery pack 100 along the third direction Z from the bottom of the cell 21, alleviating adhesion between the fluid resin or potting compound and the first part 221 during injection. Optionally, the first groove 221a close to the cell 21a-1 and the first groove 221a close to the cell 21a-2 are disposed in opposite directions. The fluid resin or potting compound is injected into the battery pack 100 from between the two first grooves 221a, helping improve the injection efficiency and further alleviating adhesion between the fluid resin or potting compound and the first part 221 during injection.

In an embodiment, the second heat sink 22 includes two first parts 221. One first part 221 is located between adjacent cells of the first-row cells 21a, and the other first part 221 is located between adjacent cells of the second-row cells 2b. The first part 221 is provided with the first groove 221a, and the first groove 221a connects two first parts 221. The first part 221 covers the cell 21a-1 and the cell 21b-1. an overlap is present between the projection of the first groove 221a along the first direction X and the projection of the cell housing 211 of the cell 21a-1 along the first direction X, an overlap is present between the projection of the first groove 221a along the first direction X and the projection of the cell housing 211 of the cell 21b-1 along the first direction X. Optionally, along the second direction Y, the first groove 221a is located between the cell housing 211 of the cell 21a-1 and the cell housing 211 of the cell 21b-1. An overlap is present between the projection of the first groove 221a along the first direction X and the cell housing 211 of the cell 21a-1along the first direction X. The first groove 221a is located on the same side as one second sealing portion 2116 of the cell 21a-1. Optionally, an overlap is present between the projection of the first groove 221a along the first direction X and a projection of the second sealing portion 2116 of the cell 21a-1 along the first direction X. Optionally, the second sealing portion 2116 of the cell 21a-1 is set to bend towards a direction away from the first groove 221a. The projection of the second sealing portion 2116 of the cell 21a-1 along the third direction Z and the projection of the first groove 221a along the third direction Z are spaced from each other. Optionally, the first groove 221a is in contact connection with the cell housing 211 of the cell 21a-1, so that heat dissipation of the cell 21a-1 can be improved. An overlap is present between the projection of the first groove 221a along the first direction X and the projection of the cell housing 211 of the cell 21b-1along the first direction X. The first groove 221a is located on the same side as one second sealing portion 2116 of the cell 21b-1. Optionally, along the first direction X, an overlap is present between the projection of the first groove 221a and a projection of the second sealing portion 2116 of the cell 21b-1. Optionally, the second sealing portion 2116 of the cell 21b-1 is set to bend towards a direction away from the first groove 221a. The projection of the second sealing portion 2116 of the cell 21b-1 along the third direction Z and the projection of the first groove 221a along the third direction Z are spaced from each other. Optionally, the first groove 221a is in contact connection with the cell housing 211 of the cell 21b-1, so that heat dissipation of the cell 21b-1 can be improved. A space between the cell 21a-1 and the cell 21b-1 is used by the second heat sink 22 to increase an area of the first groove 221a, and a passage for injecting the first insulator 60 is formed. In this case, the fluid resin or potting compound can be easily injected into the battery pack 100 from the bottom of the cell 21 to form the first insulator 60, alleviating adhesion between the fluid resin or potting compound and the first part 221 during injection.

In an embodiment, the second heat sink 22 includes two first parts 221. One first part 221 is located between adjacent cells of the first-row cells 21a, and the other first part 221 is located between adjacent cells of the second-row cells 2b. The first part 221 is provided with the first groove 221a, and the first groove 221a connects two first parts 221. The first part 221 covers the cell 21a-2 and the cell 21b-2. An overlap is present between the projection of the first groove 221a along the first direction X and the projection of the cell housing 211 of the cell 21a-2 along the first direction X, an overlap is present between the projection of the first groove 221a along the first direction X and the projection of the cell housing 211 of the cell 21b-2 along the first direction X. Optionally, along the second direction Y, the first groove 221a is located between the cell housing 211 of the cell 21a-2 and the cell housing 211 of the cell 21b-2. An overlap is present between the projection of the first groove 221a along the first direction X and the cell housing 211 of the cell 21a-2 along the first direction X. The first groove 221a is located on the same side as one second sealing portion 2116 of the cell 21a-2. Optionally, an overlap is present between the projection of the first groove 221a along the first direction X and a projection of the second sealing portion 2116 of the cell 21a-2 along the first direction X. Optionally, the second sealing portion 2116 of the cell 21a-2 is set to bend towards a direction away from the first groove 221a. The projection of the second sealing portion 2116 of the cell 21a-2 along the third direction Z and the projection of the first groove 221a along the third direction Z are spaced from each other. Optionally, the first groove 221a is in contact connection with the cell housing 211 of the cell 21a-2, so that heat dissipation of the cell 21a-2 can be improved. An overlap is present between the projection of the first groove 221a along the first direction X and the projection of the cell housing 211 of the cell 21b-2 along the first direction X. The first groove 221a is located on the same side as one second sealing portion 2116 of the cell 21b-2. Optionally, an overlap is present between the projection of the first groove 221a along the first direction X and a projection of the second sealing portion 2116 of the cell 21b-2 along the first direction X. Optionally, the second sealing portion 2116 of the cell 21b-2 is set to bend towards a direction away from the first groove 221a. The projection of the second sealing portion 2116 of the cell 21b-2 along the third direction Z and the projection of the first groove 221a along the third direction Z are spaced fromeach other. Optionally, the first groove 221a is in contact connection with the cell housing 211 of the cell 21b-2, so that heat dissipation of the cell 21b-2 can be improved. Optionally, the first groove 221a close to the cell 21a-1 and the first groove 221a close to the cell 21a-2 are disposed in opposite directions. A space between the cell 21a-2 and the cell 21b-2 is used by the second heat sink 22 to increase an area of the first groove 221a. In this case, the fluid resin or potting compound can be easily injected into the battery pack 100 from the bottom of the cell 21 to form the first insulator 60, alleviating adhesion between the fluid resin or potting compound and the first part 221 during injection.

In some embodiments, the first groove 221a is set to extend along the third direction Z and forms a second passage 221b, so that the first insulator 60 can be injected into the battery pack 100 along the third direction Z from the bottom of the cell 21. Optionally, a second structural member 221c and a second clearance 2211 are provided between adjacent first parts 221. This can increase width of the second passage 221b along the first direction X and enlarge an area of an injection port of the second passage 221b, helping an external injection device align with the second passage 221b and improving the efficiency of injecting the first insulator 60. Optionally, the second structural member 221c includes an elastic member. When a cell 21 swells, the elastic member 221c can be compressed to provide space for the swelling cell 21. Optionally, the second structural member 221c includes foam. Optionally, a surface of the first section 211a in contact with the first groove 221a is in an arc shape, so that the first groove 221a is disposed between two cells 21 arranged along the second direction Y and the first groove 221a extends further along the second direction Y. Optionally, viewed along the second direction Y, the second sealing portion 2116 is located in a middle position of the first section 211a and set to bend, so that a space is reserved for accommodating the first groove 221a.

In an embodiment, the second heat sink 22 further includes a second part 222. The second part 222 is connected to a side of the first part 221. The second part 222 extends between adjacent cells 21 and bends towards the cells 21, so that the first part 222 is connected to the cell housing 211. Optionally, the second part 222 is in contact connection with the cell housing 211. Optionally, the second part 222 and the cell housing 211 are connected via another structural member, such as a thermally conductive pad or thermally conductive adhesive. A projection of the first part 222 along the second direction Y overlaps a projection of the cell 21 along the second direction Y at least partially. The second part 222 is set to be in contact connection with the cell housing 211, increasing an area of contact between the second heat sink 22 and the cell housing 211. Heat is transferred through the cell housing 211 to the second part 222 and then to the first housing 11, so that the heat dissipation effects for the cells 21 are improved.

In an embodiment, two cells 21 arranged along the second direction Y are used as first-set cells 21c. The first-set cells 21c include a first side face 21c-1, a second side face 21c-2, and a third side face 21c-3. The first side face 21c-1 and the second side face 21c-2 are arranged along the second direction Y, and the third side face 21c-3 is the bottom of the first-set cells 21c. A plurality of second parts 222 are disposed on a side of the first part 221. The plurality of second parts 222 extend between adjacent cells 21 and bend towards the cells 21, so that the second parts 222 are in contact connection with the first side face 21c-1, the second side face 21c-2, and the third side face 21c-3. In this case, the first-set cells 21c are surrounded by the second parts 222, further improving the heat dissipation effects for the cells 21. Optionally, a first thermally conductive pad 222a is disposed between the third side face 21c-3 and the second part 222, and a second thermally conductive pad is disposed between adjacent first parts 221, further improving the heat dissipation effects for the cells 21.

In an embodiment, the first part 221 and the second part 222 are integrally bent and formed, so as to improve the structural strength of the second heat sink 22. Optionally, the second heat sink 22 is an aluminum shell.

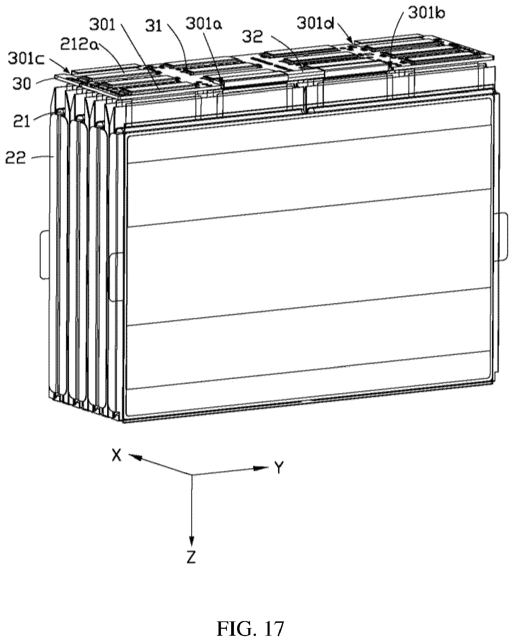

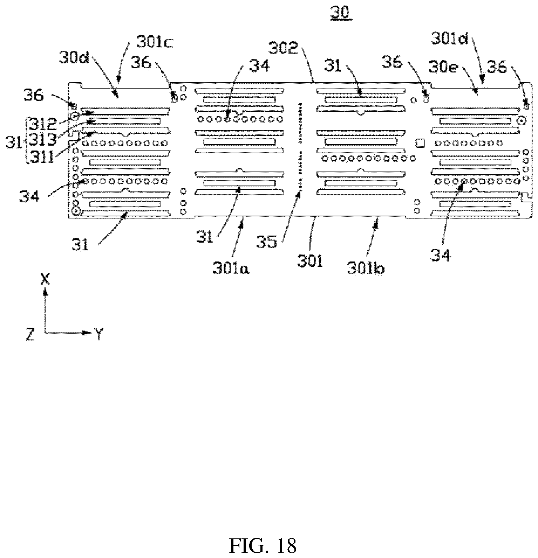

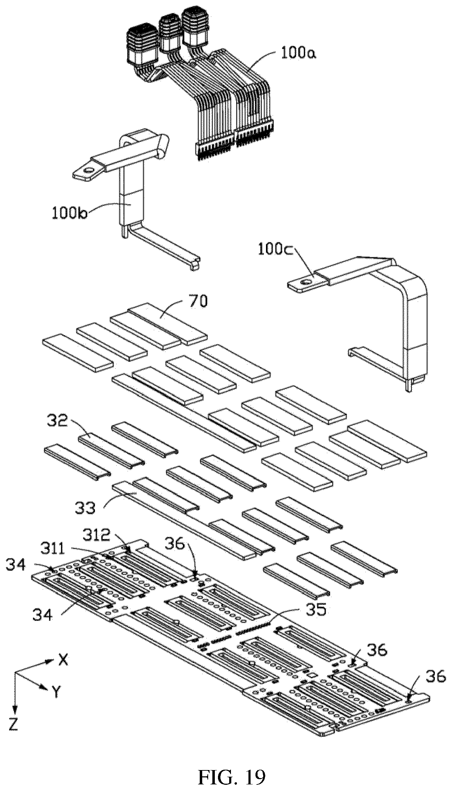

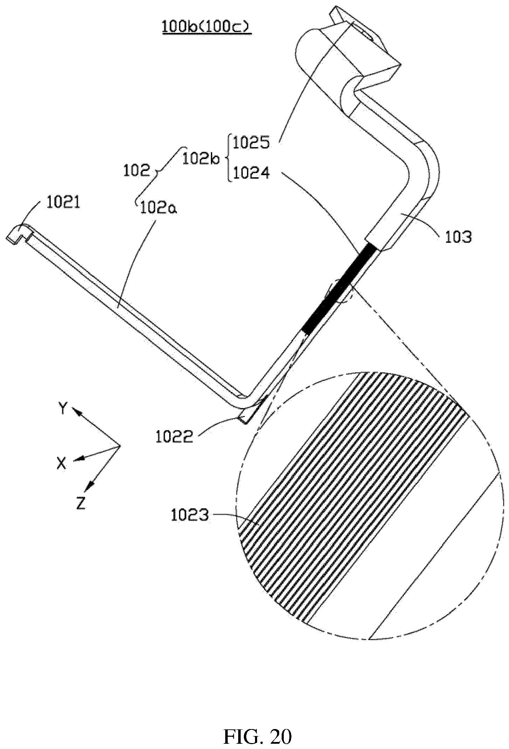

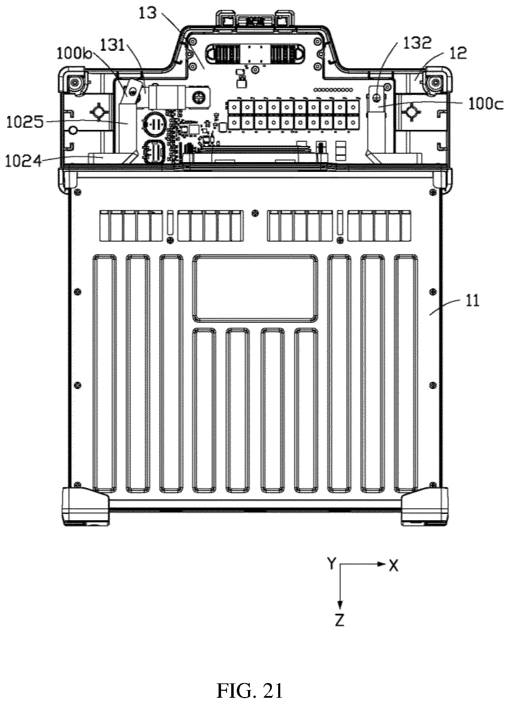

Referring to FIG. 17, FIG. 18, FIG. 19, FIG. 20, and FIG. 21, in an embodiment, the first circuit board 30 is provided with a plurality of sets of holes 31, where each set of holes 31 includes a first hole 311 and a second hole 312, the first hole 311 and the second hole 322 being arranged along the first direction X. The first hole 311 and the second hole 312 extend along the second direction Y. The first terminal 212b of one of adjacent cells 21 runs through the first hole 311 and the second terminal 212c of the other one the adjacent cells 21 runs through the second hole 312. The welding portion 212a of the first terminal 212b and the welding portion 212a of the second terminal 212c are stacked and then connected to the first circuit board 30.

Optionally, the first circuit board 30 is provided with a plurality of first conductive sheets 32, where the first conductive sheet 32 is connected to the first circuit board 30 and disposed along the first hole 311 and the second hole 312. The first terminal 212b of one of adjacent cells 21 runs through the first hole 311 and the second terminal 212c of the other one of the adjacent cells 21 runs through the second hole 312. The welding portion 212a of the first terminal 212b and the welding portion 212a of the second terminal 212c are stacked and then welded to the first conductive sheet 30. Welding includes laser welding, ultrasonic welding, and the like. In another embodiment, the welding portion 212a may be connected to the first conductive sheet 32 by other means such as thermally conductive adhesive.

Optionally, each set of holes 31 further includes a third hole 313. The third hole 313 is located between the first hole 311 and the second hole 312 when viewed along the third direction Z. An overlap is present between a projection of the third hole 313 along the third direction Z and a projection of the first conductive sheet 32 along the third direction Z. Optionally, the projection of the third hole 313 falls along the third direction Z within the projection of the first conductive sheets 32 along the third direction Z. When the third hole 313 is set, the first insulator can flow into the battery pack 100 through the third hole 313.

In an embodiment, the first circuit board 30 is further provided with a second conductive sheet 33. The second conductive sheet 33 connects two electrode terminals 212 of two cells 21 arranged along the second direction Y, and is configured to transfer current from the first row 21a to the second row 21b, implementing series connection or parallel connection between the first row 21a and the second row 21b. Optionally, along the third direction Z, thickness of second conductive sheet 33 is greater than that of the first conductive sheet 32. The thickness of the second conductive sheet 33 is increased, so that higher current can be transferred.

In an embodiment, the first circuit board 30 is further provided with a plurality of first communicating holes 34. The first communicating holes 34 run through the first circuit board 30 along the third direction Z. Some of first communicating holes 34 are arranged along the second direction Y, and some of first communicating holes 34 are arrange along the first direction X. The first communicating holes 34 can allow the first insulator 60 to flow into the battery pack 100, improving the efficiency of injecting the first insulator 60 into the battery pack 100.

In an embodiment, the first circuit board 30 is further provided with a plurality of second communicating holes 35, and the plurality of second communicating holes 35 are arranged along the first direction X. Along the second direction Y, the plurality of second communicating holes 35 are disposed in a middle position of the first circuit board 30. The battery pack 100 further includes a sampling wire harness 100a. The sampling wire harness 100a is connected to the first circuit board 30 through the plurality of second communicating holes 35.

In an embodiment, the battery pack 100 further includes a first electrical connection portion 100b and a second electrical connection portion 100c. Optionally, the first electrical connection portion 100b and the second electrical connection portion 100c are welded to the first circuit board 30. Optionally, the first circuit board 30 is provided with a third region 30d and a fourth region 30e. The first electrical connection portion 100b is welded to the third region 30d, and the second electrical connection portion 100c is welded to the fourth region 30e. Optionally, the first circuit board 30 is provided with a plurality of third communicating holes 36. The first electrical connection portion 100b and the second electrical connection portion 100c are connected to the first circuit board 30 through the third communicating holes 36. The first electrical connection portion 100b is connected to one of the first terminal 212b and the second terminal 212c, and the second electrical connection portion 100c is connected to the other one. The first electrical connection portion 100b and the second electrical connection portion 100c are connected to the second circuit board 13. Energy of the cell 21 is conducted to an external device through the first electrical connection portion 100b and the second electrical connection portion 100c. Optionally, the first electrical connection portion 100b and the second electrical connection portion 100c include a copper busbar.

In an embodiment, the first electrical connection portion 100b includes a first conductive portion 102 and a first insulation portion 103. The first conductive portion 102 includes a first segment 102a and a second segment 102b. The first segment 102a is connected to the first circuit board 30. Optionally, the first segment 102a is welded to the third region 30d. Optionally, the first segment 102a is provided with a first connecting protrusion 1021 and a second connecting protrusion 1022, and the first connecting protrusion 1021 and the second connecting protrusion 1022 are disposed along the third communicating holes 36. The second segment 102b may be a flexible structure. Optionally, the second segment 102b includes a plurality of laminated slices 1023. Optionally, thickness of the second segment 102b is 2 mm, and thickness of each slice 1023 is 0.1 mm. Optionally, the slice 1023 includes a flexible copper slice. Optionally, the second segment 102b includes a third structural member 1024 and a fourth structural member 1025. The third structural member 1024 extends in a direction opposite to the third direction Z and bends along the second direction Y. The fourth structural member 1025 is connected to an end of the third structural member 1024 away from the first segment 102a, and is folded in a direction opposite to the first direction X. The first insulation portion 103 covers a surface of the second segment 102b. An end of the fourth structural member 1025 away from the first segment 102a protrudes from the first insulation portion 103 and is configured for connection with the first connecting portion 131. During assembly of the first housing 11 and the second housing 12, the first electrical connection portion 100b and the second circuit board 13 are assembled first. Specifically, the fourth structural member 1025 is bent roughly to the third direction Z, the fourth structural member 1025 is connected to the first connecting portion 131, and the second housing 12 is connected to the first housing 11. When the second housing 12 is being disposed to cover the first housing 11, the fourth structural member 1025 is driven to bend from the third direction Z to a direction roughly opposite to the first direction X. Finally, assembly of the first housing 11 and the second housing 12 is completed. It can be understood that the first electrical connection portion 100b is in an initial state when the assembly of the first housing 11 and the second housing 12 is completed. This can reduce length of the first electrical connection portion 100b and thereby shortens an energy loop, and can reduce a weight of the first electrical connection portion 100b.

Optionally, the second electrical connection portion 100c and the first electrical connection portion 100b adopt the same structure, but bend in different directions. Specifically, the third structural member 1024 of the first electrical connection portion 100b extends in a direction opposite to the third direction Z and bends along the second direction Y, while the second electrical connection portion 100c extends in a direction opposite to the third direction Z and bends in a direction opposite to the second direction Y.

In an embodiment, the first circuit board 30 is further provided with a plurality of notches. At least one electrode terminal 212 runs through the notch and is connected to the first circuit board 30.

In an embodiment, the first circuit board 30 includes a first side 301 and a second side 302 arranged along the first direction X. Notches 30a include a first notch 301a and a second notch 301b, and the first notch 301a and the second notch 301b are arranged on the first side 301 along the second direction Y. The electrode terminal 212 of the cell 21b-1 adjacent to the cell 21b-1 runs through the first notch 301a and is connected to the second conductive sheet 33, and the electrode terminal 212 of the cell 21b-1 adjacent to the cell 21a-1 runs through the second notch 301b and is connected to the second conductive sheet 33. Optionally, the first notch 301a and the second notch 301b communicate with each other.

In an embodiment, the notches 30a further include a third notch 301c. The third notch 301c is provided on the second side 302, and the electrode terminal 212 of the cell 21a-7 farther away from the cell 21b-7 runs through the third notch 301c and is connected to the first electrical connection portion 100b.

In an embodiment, the notches 30a further include a fourth notch 301d. The fourth notch 301d is provided on the second side 302, and the third notch 301c and the fourth notch 301d are arranged on two ends of the second side 302 along the second direction Y. The electrode terminal 212 of the cell 21b-7 farther away from the cell 21a-7 runs through the fourth notch 301d and is connected to the second electrical connection portion 100c.

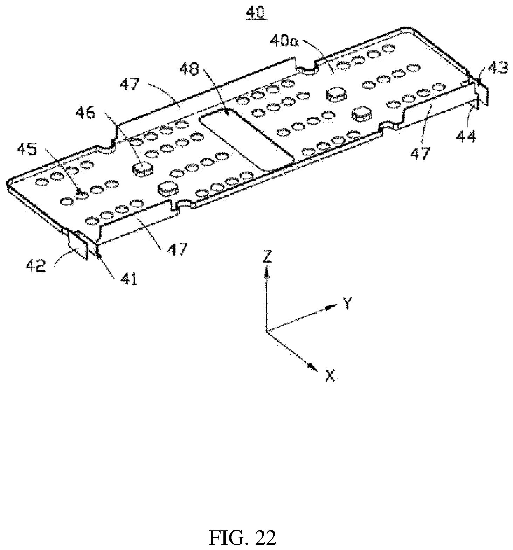

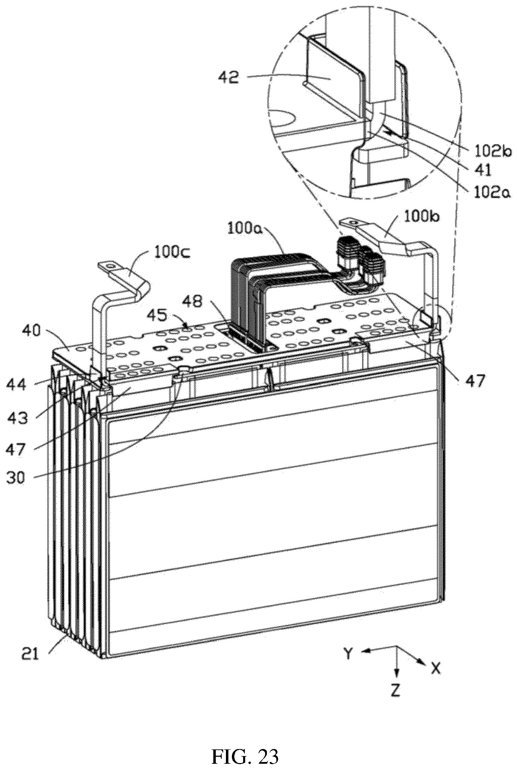

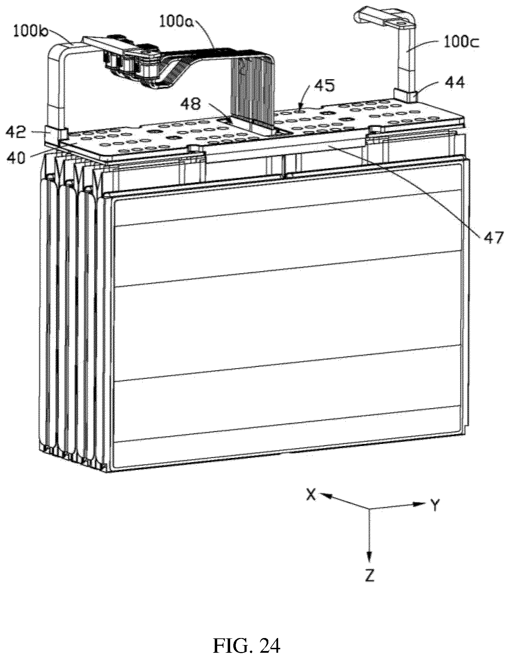

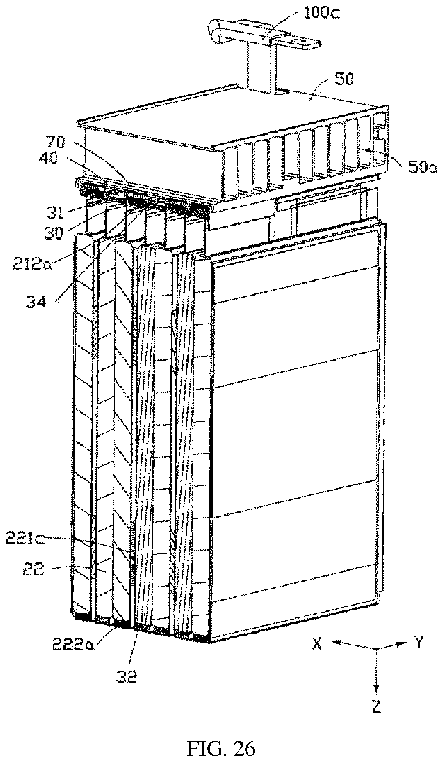

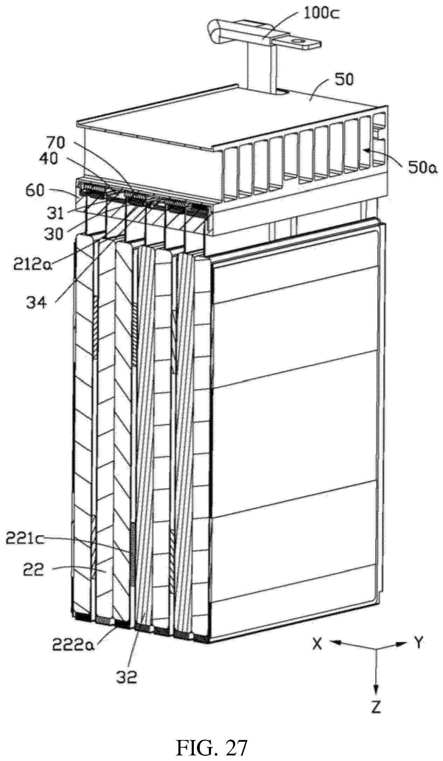

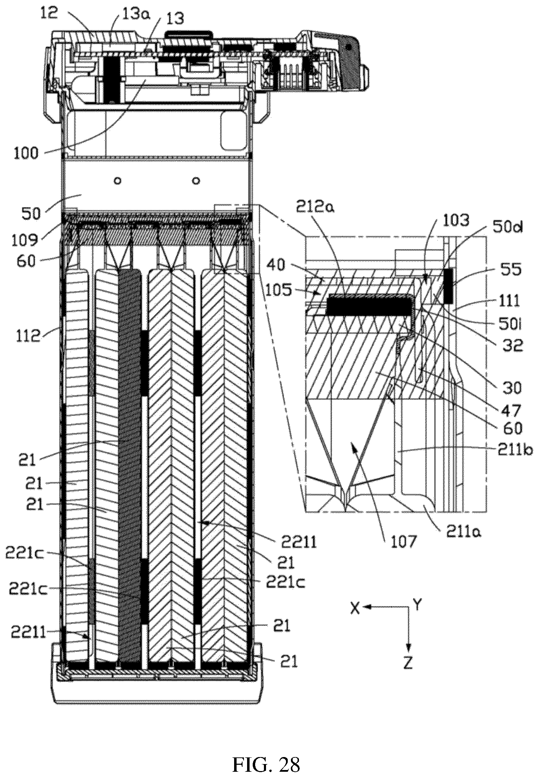

Referring to FIG. 22, FIG. 23, FIG. 24, FIG. 25, FIG. 26, FIG. 27, and FIG. 28, the first structural member 40 is insulative. Optionally, the first structural member 40 is made of an insulating material. Optionally, the first structural member 40 is made of a metal material and an insulating material. The insulating material may cover an outer surface of the metal material.

In an embodiment, the first structural member 40 includes a first main body 40a. The first main body 40a covers and insulates the first circuit board 30. The first structural member 40 is provided with a first opening 41. Along the third direction Z, the first opening 41 runs across surfaces of the first main body 40a. The first electrical connection portion 100b runs through the first opening 41 and extends to a side of the first structural member 40 away from the first circuit board 30. Optionally, the first structural member 40 is provided with a first protrusion 42, and the first protrusion 42 is provided on an edge of the first opening 41. The first protrusion 42 is configured to position the first electrical connection portion 100b. A bending part connect the the first segment 102a and the second segment 102b, the projections of the bending part along the second direction Y located within a projection of the first protrusion 42 along the second direction Y. The first protrusion 42 is configured to insulate the first segment 102a and the bending part of the second segment 102b, reducing the risk of short circuit the bending

part. Optionally, an overlap is present between a projection of the first insulation portion 103 along the second direction Y and the projection of the first protrusion 42 along the second direction Y, increasing length of the first protrusion 42 along the third direction Z and further improving insulation of the first segment 102a and the bending part of the second segment 102b.

In an embodiment, the first main body 40a is provided with a second opening 43, and the second electrical connection portion 100c runs through the second opening 43. Optionally, the first structural member 40 is provided with a second protrusion 44, and the second protrusion 44 is provided on an edge of the second opening 43. The second protrusion 44 is used to position and insulate the second electrical connection portion 100c.

In an embodiment, the first structural member 40 is provided with a plurality of fourth communicating holes 45 arranged along the second direction Y. The first insulator 60 flows between the first structural member 40 and the first heat sink 50 through the fourth communicating holes 45. The first insulator 60 conducts heat to the first heat sink 50. Optionally, a projection of the fourth communicating hole 45 along the third direction Z and a projection of the first communicating hole 34 along the third direction Z are spaced from each other. Optionally, viewed along the third direction Z, an overlapped part of the welding portions 212a of adjacent cells 21 is at least partially located in the fourth communicating hole 45. Optionally, the fourth communicating hole 45 is provided with the first insulator 60, and the first insulator 60 conducts heat to the first heat sink 50.

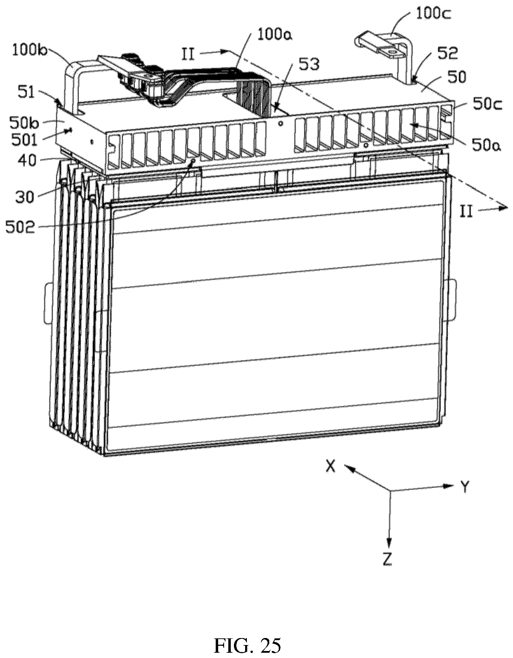

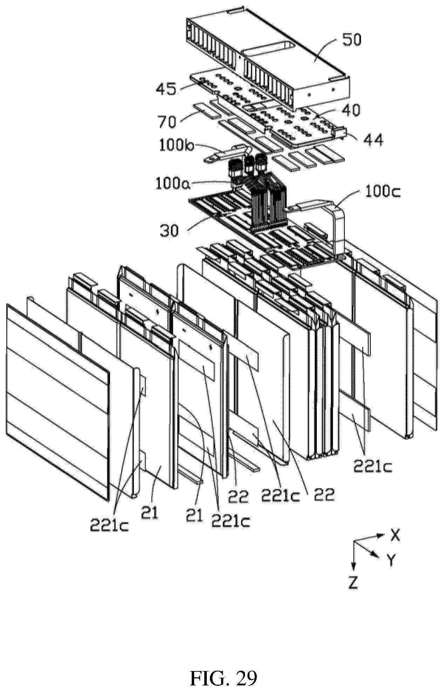

Referring to FIG. 25 and FIG. 29, in an embodiment, a third thermally conductive pad 70 is disposed between the first circuit board 30 and the first structural member 40 and configured to transfer heat from the first circuit board 30 to the first structural member 40. Optionally, the heat from the first circuit board 30 includes heat from the welding portion 212a and heat from the first conductive sheet 32 and the second conductive sheet 33. Optionally, the projection of the fourth communicating hole 45 along the third direction Z is loacted within a projection of the third thermally conductive pad 70 along the third direction Z. The third thermally conductive pad 70 covers the fourth communicating hole 45, reducing the risk of short circuit with the first circuit board 30 in the fourth communicating hole 45. Optionally, the fourth communicating hole 45 is provided with the first insulator 60. After the heat from the first circuit board 30 is conducted to the third thermally conductive pad 70, the first insulator 60 in the fourth communicating hole 45 can transfer the heat to the first heat sink 50 faster, so as to improve heat dissipation.

In an embodiment, a third protrusion 46 is provided on a side of the first structural member 40 facing the first circuit board 30. A projection of the third protrusion 46 along the third direction Z, is between the projection of adjacent first conductive sheets 32 along the third direction Z, the adjacent first conductive sheets 32 are arranged along the second direction Y and is configured to position the first structural member 40.

In an embodiment, the first structural member 40 includes a fourth protrusion 47 attached to an edge of the first main body 40a. Optionally, an overlap is present between a projection of the fourth protrusion 47 along the first direction X and a projection of the first circuit board 30 along the first direction X. The fourth protrusion 47 defines a position where the first structural member 40 is connected to the first circuit board 30, and facilitates assembly. Optionally, the projection of the first circuit board 30 along the first direction X is located within the projection of the fourth protrusion 47 along the first direction X. Optionally, an overlap is present between the projection of the fourth protrusion 47 along the first direction X and the projection of the cell housing 211 along the first direction X, an overlap is present between the projection of the fourth protrusion 47 along the first direction X and the electrode terminal 212 along the first direction X, so that the electrode terminal 212 can be insulated. Optionally, the projection of the welding portion 212a along the first direction X is located within the projection of the fourth protrusion 47 along the first direction X, further enhancing the insulation.

In an embodiment, the first structural member 40 is provided with a third opening 48 configured to allow the sampling wire harness 100a to pass.

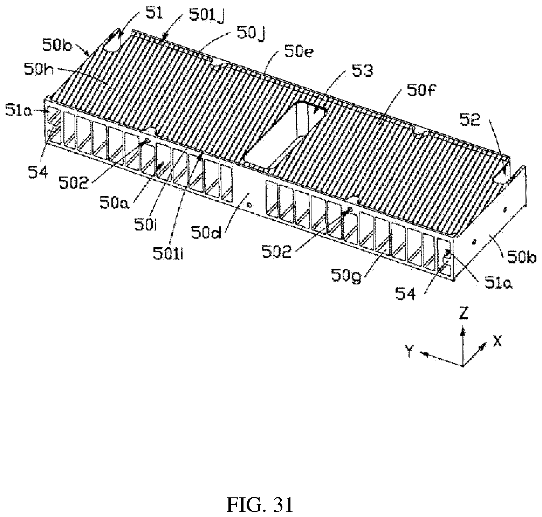

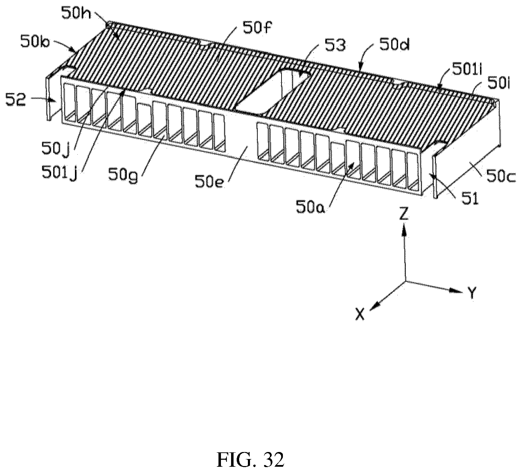

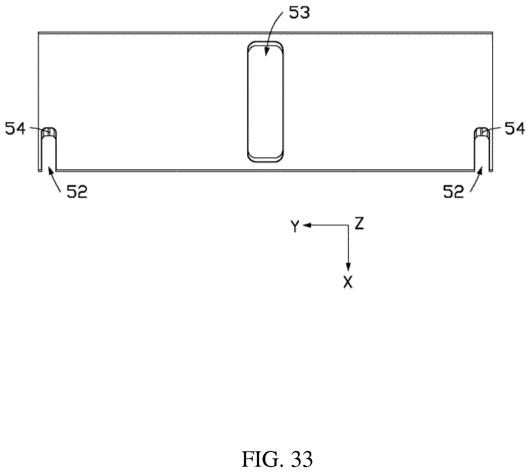

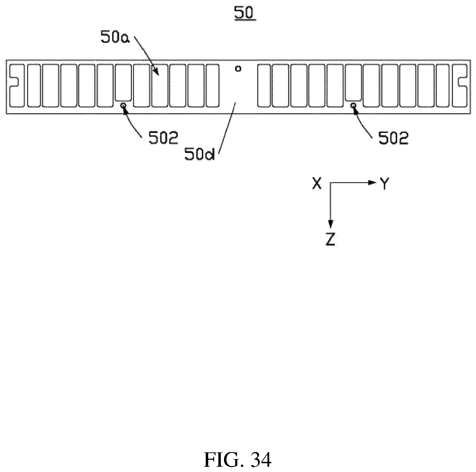

Referring to FIG. 31, FIG. 32, FIG. 33, FIG. 34, and FIG. 35, in an embodiment, the first heat sink 50 is provided with a plurality of first passages 50a, and the plurality of first passages 50a are arranged along the second direction Y. The first heat sink 50 is provided with a fourth opening 51. Optionally, one of the two outermost first passages 50a arranged along the second direction Y communicates with the fourth opening 51. Optionally, the first heat sink 50 is provided with a fifth opening 52, and the fifth opening 52 communicates with the other one of the two outermost first passage 50a.

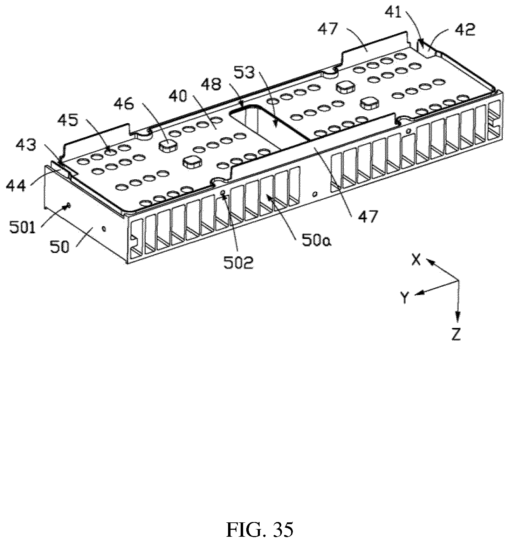

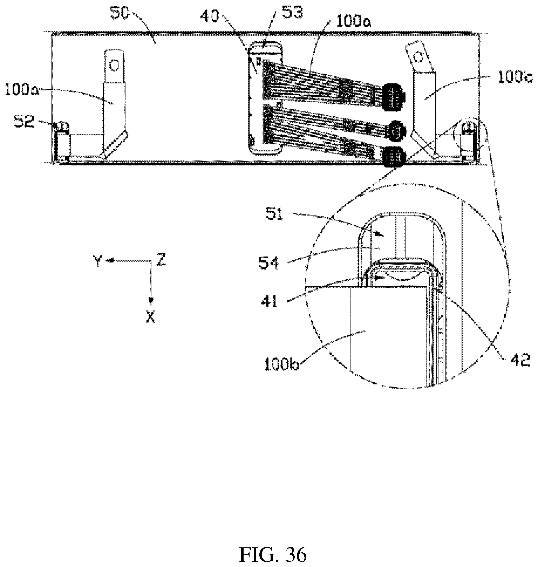

Referring to FIG. 35 and FIG. 36, when the first structural member 40 is connected to the first heat sink 50, the first protrusion 42 is located in the fourth opening 51. The projection of the first protrusion 42 along the third direction Z is located within a projection of the fourth opening 51 along the third direction Z. The first electrical connection portion 100b runs through the fourth opening 51. Optionally, the first heat sink50 is provided with a sixth opening 53. The sampling wire harness 100a runs through the sixth opening 53. Optionally, a fourth insulator is provided in the fourth opening 51 and the sixth opening 53 for closing the fourth opening 51 and the sixth opening 53. In this way, when the first insulator 60 is injected, less first insulator 60 will overflow the fourth opening 51 and the sixth opening 53. In addition, the first protrusion 42 is disposed in the fifth opening, which can control flow of the fourth insulator and reduce amount the fourth insulator from the first opening 41 flowing between the first structural member 40 and the first circuit board 30. Optionally, the fourth insulator includes resin. After being heated and melted, the fluid fourth insulator is disposed in the fourth opening 51 and the sixth opening 53 by means of pouring and solidification. Optionally, the fourth insulator includes quick-drying adhesive, and hardness of the solidified quick-drying adhesive is 30A. Tensile strength of the quick-drying adhesive is 0.97 MPa. Adhesive strength of the quick-drying adhesive is 0.5 MPa. Breakdown voltage of the quick-drying adhesive is 21 kV/mm. Volume resistivity of the quick-drying adhesive is 8.5×10¹⁵Ω·cm. The quick-drying adhesive is usable at a temperature ranging from 40°C to 200°C, where the temperature may be any one of 40°C, 50°C, 60°C, 70°C, 80°C, 90°C, 100°C, 110°C, 120°C, 130°C, 140°C, 150°C, 160°C, 170°C, 180°C, 190°C, or 200°C.

In an embodiment, the fourth protrusion 54 is provided in two outermost first passages 50a arranged along the second direction Y. The fourth protrusion 54 is in contact connection with and positions the first protrusion 42, and then the first electrical connection portion 100b is positioned. Moreover, a space can be reserved to facilitate injection of the fourth insulator.

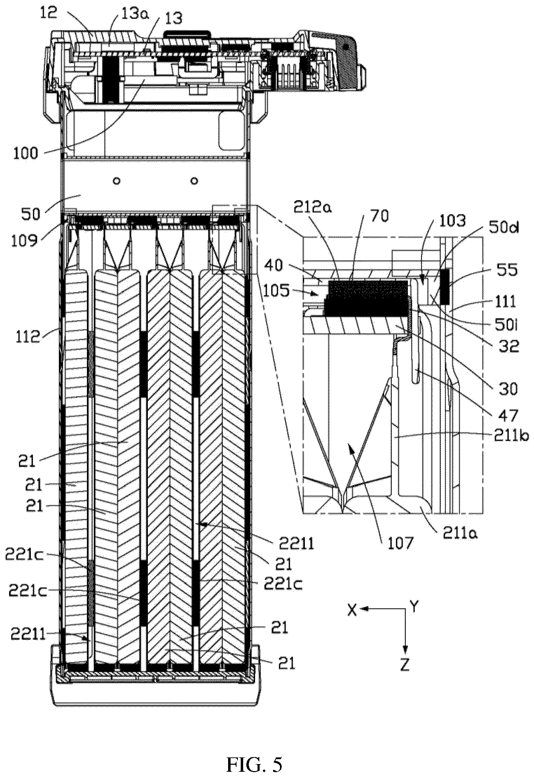

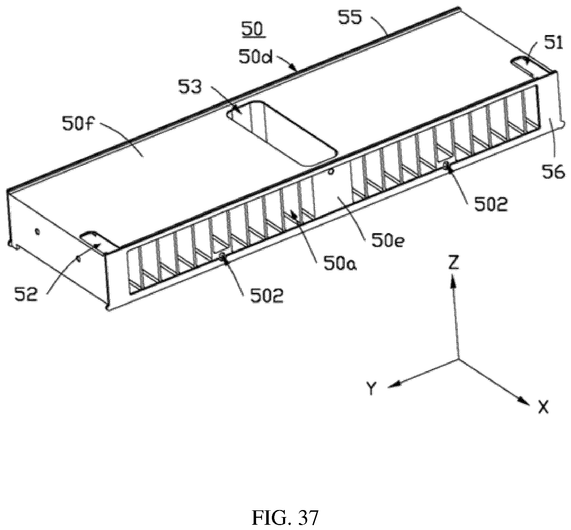

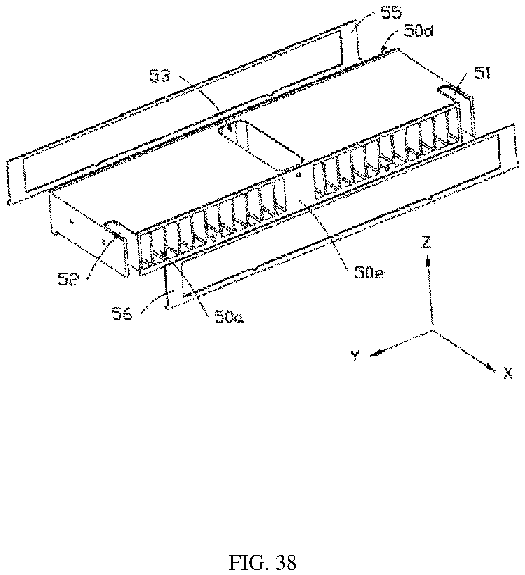

Referring to FIG. 5, FIG. 37, and FIG. 38, in an embodiment, the first heat sink 50 is provided with a third side wall 50d and a fourth side wall 50e, the third side wall 50d and the fourth side wall 50e being arranged along the first direction X. A fourth connecting hole 502 is provided on the third side wall 50d and the fourth side wall 50e. The third side wall 50d is provided with a first insulation portion 55. The first insulation portion 55 is disposed between the third side wall 50d and the first wall 111 and can fill a gap between the third side wall 50d and the first wall 111, reducing the first insulator 60 flowing between the third side wall 50d and the first wall 111. Further, the first heat sink 50 and the first housing 11 can be insulated thereby. Optionally, the first insulation portion 55 includes foam. Optionally, a surface of the foam attached to the third side wall 50d and the first wall 111 is provided with adhesive and capable of being bonded to the third side wall 50d and the first wall 111. Optionally, the foam is compressed between the third side wall 50d and the first wall 111, so that sealing of a gap between the third side wall 50d and the first wall 111 can be enhanced. Optionally, the fourth side wall 50e is provided with a second insulation portion 56. The second insulation portion 56 is disposed between the fourth side wall 50e and the second wall 112 and can fill a gap between the fourth side wall 50e and the second wall 112, reducing the first insulator 60 flowing between the fourth side wall 50e and the second wall 112. Further, the first heat sink 50 and the first housing 11 can be insulated thereby. Optionally, the second insulation portion 56 includes foam. Optionally, a surface of the foam attached to the fourth side wall 50e and the second wall 112 is provided with adhesive and capable of being bonded to the fourth side wall 50e and the second wall 112. Optionally, the foam is compressed between the fourth side wall 50e and the second wall 112, so that sealing of a gap between the fourth side wall 50e and the second wall 112 can be enhanced.

In an embodiment, an outer surface of the first heat sink 50 includes a metal material layer such as aluminum, which is conducive to heat dissipation. Optionally, a material the first heat sink 50 includes a metal material, and an outer surface of the first heat sink 50 may be coated with an insulation layer. Optionally, a material the first heat sink 50 includes a metal material, and an outer surface of the first heat sink 50 includes a metal material layer.

In an embodiment, the first heat sink 50 includes a bottom wall 50f and a top wall 50g. The third side wall 50d connects the bottom wall 50f and the top wall 50g, and the fourth side wall 50e connects the bottom wall 50f and the top wall 50g. An outer surface of the bottom wall is coated with a first insulation layer 50h. The third side wall 50d includes a third side wall extension 50i extending out of the bottom wall 50f, and a surface of the third side wall extension 50i is coated with a second insulation layer 501i. The fourth side wall 50e includes a fourth side wall extension 50j extending out of the bottom wall 50f, and a surface of the fourth side wall extension 50j is coated with a third insulation layer 501j. The first circuit board 30 can be insulated by the first insulation layer 50h, the second insulation layer 501i, and the third insulation layer 501j.

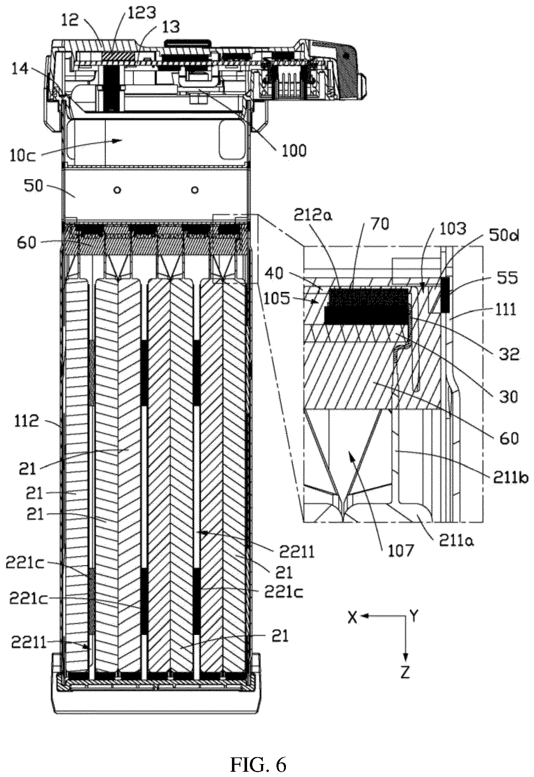

Referring to FIG. 5 and FIG. 6, a first spacing 104 is provided between the first heat sink 50 and the first structural member 40, a second spacing 105 is provided between the first circuit board 30 and the first structural member 40, and a third spacing 107 is provided between the cell housing 211 and the first housing 11. The first insulator 60 is filled in the first spacing 104, the second spacing 105, and the third spacing 107. The projections of the welding portion 212a along the second direction Y is located within the projection of the first insulator 60 along the second direction Y, the projections of the first circuit board 30 along the second direction Y is located within the projection of the first insulator 60 along the second direction Y, the projections of the third thermally conductive pad 70 along the second direction Y is located within the projection of the first insulator 60 along the second direction Y, the projections of the first structural member 40 along the second direction Y is located within the projection of the first insulator 60 along the second direction Y. Heat from the electrode terminal 212 and the first circuit board 30 is transferred to the first heat sink 50 by the first insulator 60, and the heat from the electrode terminal 212 and the first circuit board 30 is dissipated through the first passage 50a. Further, the first spacing 104 is located between the fourth protrusion 47 and the third side wall extension 50i, and the first insulator 60 flows between the first structural member 40 and the first heat sink 50 through the first spacing 104. Optionally, width of the first spacing 104 along the first direction X is 0.5 mm-3 mm. Further, the width of the first spacing 104 along the first direction X is 1.5 mm-2.8 mm, which may be any one of 1.5 mm, 1.6 mm, 1.7 mm, 1.8 mm, 1.9 mm, 2.0 mm, 2.1 mm, 2.2 mm, 2.3 mm, 2.4 mm, 2.5 mm, 2.6 mm, 2.7 mm, or 2.8 mm.

Optionally, a fourth spacing 109 is located between the fourth protrusion 47 and the fourth side wall extension 50j, and the first insulator 60 flows between the first structural member 40 and the first heat sink 50 through the fourth spacing 109. Optionally, width of the fourth spacing 109 along the first direction X is 0.5 mm-3 mm. Further, the width of the first spacing 104 along the first direction X is 1.5 mm-2.8 mm, which may be any one of 1.5 mm, 1.6 mm, 1.7 mm, 1.8 mm, 1.9 mm, 2.0 mm, 2.1 mm, 2.2 mm, 2.3 mm, 2.4 mm, 2.5 mm, 2.6 mm, 2.7 mm, or 2.8 mm.

Optionally, the second spacing 105 is located between the first circuit board 30 and the first structural member 40, and the first insulator 60 flows to the second spacing 105 through the first communicating hole 34 of the first circuit board 30.

Optionally, the third spacing 107 is located between the first circuit board 30 and the cell housing 211, and the first insulator 60 flows to the third spacing 107 through the first groove 221a.

It can be understood that when the first insulator 60 is injected into the battery pack 100, the first insulator 60 flows to the third spacing 107, the first spacing 104 and the fourth spacing 109 through the first groove 221a. The first insulator 60 along the first spacing 104 and the fourth spacing 109 flows between the first structural member 40 and the first heat sink 50, and the first insulator 60 along the third spacing 107 flows to the second spacing 105 through the first communicating hole 34 and then flows between the first structural member 40 and the first heat sink 50 through the fourth communicating hole 45.

Optionally, a fourth space 111a is provided between the first heat sink 50 and the second circuit board 13. The heat generated by the second circuit board 13 gathers in the fourth space 111a. During heat dissipation along the first passage 50a, a surface of the first heat sink 50 close to the second circuit board 13 is relatively lower, and the heat generated by the second circuit board 13 is transferred to the surface of the first heat sink 50. In this way, heat dissipation is implemented for the second circuit board 13.

In this application, the second heat sink 22 transfers the heat from the cell housing 211 to the first housing 11 for heat dissipation, the first insulator 60 and the first heat sink 50 are used to dissipate heat of the electrode terminal 212 and the first circuit board 30, and the first heat sink 50 is used to perform heat dissipation for the second circuit board 13. In this way, heat dissipation of the battery pack 100 is improved.

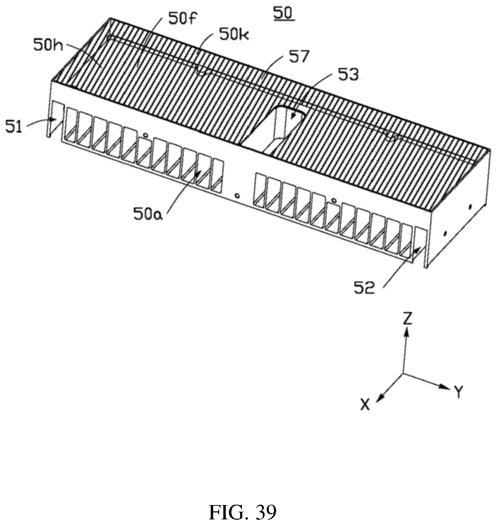

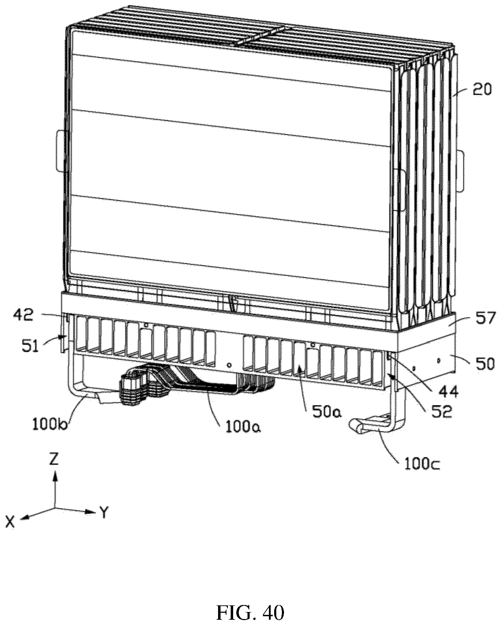

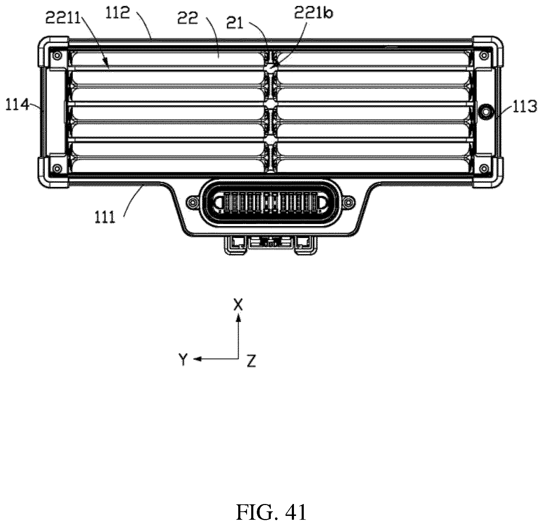

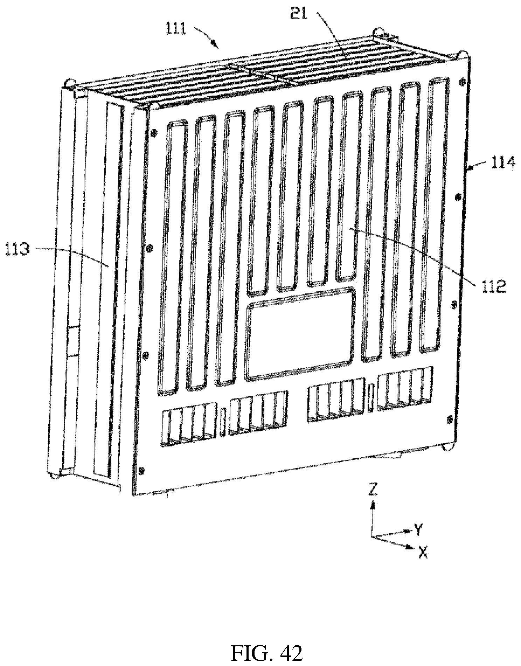

Referring to FIG. 6, FIG. 39, FIG. 40, FIG. 41 and FIG. 42, in an embodiment, a fifth protrusion 57 is provided on an edge of a side of the first heat sink 50 connected to the first structural member 40. The projections of the welding portion 212a along the first direction X is located within the projection of the fifth protrusion 57 along the first direction X, the projection of the first circuit board 30 along the first direction X is located within the projection of the fifth protrusion 57 along the first direction X, the projection of the third thermally conductive pad 70 along the first direction X is located within the projection of the fifth protrusion 57 along the first direction X, and the projection of the first structural member 40 along the first direction X is located within the projection of the fifth protrusion 57 along the first direction X. A fifth space is formed by the fifth protrusion 57 and the bottom wall 50f of the first heat sink 50, and the welding portion 212a, the first circuit board 30, the third thermally conductive pad 70, and the first structural member 40 are provided in the fifth space. The first insulator 60 is provided in the fifth space. Optionally, an inner surface of the fifth protrusion 57 is coated with a fourth insulation layer 50k, so that the first circuit board 30 and the electrode terminal 212 can be insulated.

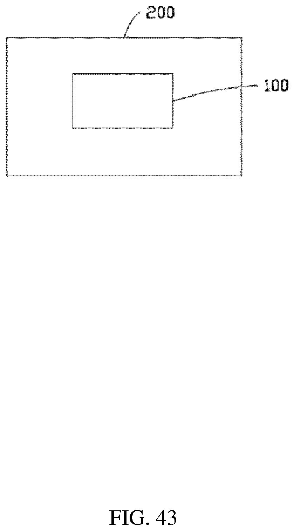

Referring to FIG. 43, this application further provides an electric device 200 using the foregoing battery pack 100. In an implementation, the electric device 200 of this application may be, but is not limited to, a drone, a backup power source, an electric vehicle, an electric motorcycle, an electric motor bicycle, an electric tool, a large household battery, or the like.

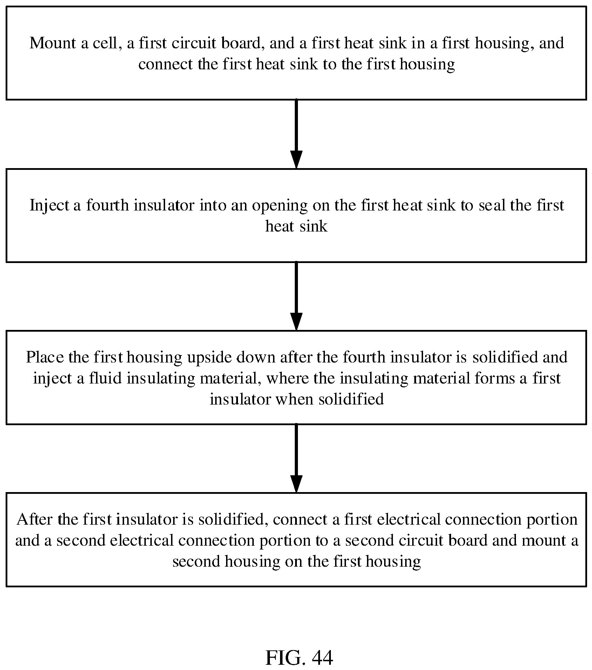

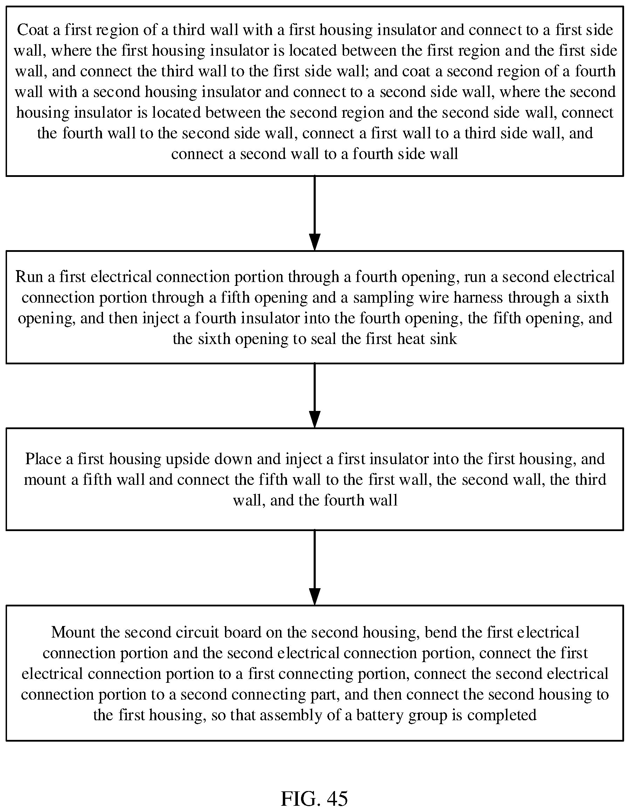

Referring to FIG. 44 and FIG. 45, this application further provides a method for manufacturing the battery pack 100. The method includes the following steps.

Step 1. Mount the cell 21, the first circuit board 30, and the first heat sink 50 in the first housing 11, and connect the first heat sink 50 to the first housing 11.

Step 2. Inject a fourth insulator into an opening of the first heat sink 50 to seal the first heat sink 50.

Step 3. Place the first housing 11 upside down after the fourth insulator is solidified and inject a fluid insulating material, where the insulating material forms the first insulator 60 when solidified.

Step 4. After the first insulator is solidified, connect the first electrical connection portion 100b and the second electrical connection portion 100c to the second circuit board 13 and mount the second housing 12 on the first housing 11.

Referring to Fig. 4, Fig. 8, and Fig. 42, in an embodiment, the connecting the first heat sink 50 to the first housing 11 in step 1 includes: coating the first region 113a of the third wall 113 with the first housing insulator 1130 and connecting the third wall 113 to the first side wall 50b, where the first housing insulator 1130 is located between the first region 113a and the first side wall 50b. With the third wall 113 connected to the first side wall 50b, a gap between the third wall 113 and the first side wall 50b is reduced. Step 1 includes: coating the second region 114a of the fourth wall 114 with the second housing insulator 1140 and connecting the fourth wall 114 to the second side wall 50c, where the second housing insulator 1140 is located between the second region 114a and the second side wall 50c. With the fourth wall 114 connected to the second side wall 50c, a gap between the fourth wall 114 and the second side wall 50c is reduced

Further, the step of connecting the third wall 113 to the first side wall 50b includes running the first fastener 113c through the first connecting hole 113b and the second connecting hole 501. Step 1 includes running the second fastener 1112 through the third connecting hole 1111 and the fourth connecting hole 502 and connecting the first wall 111 to the third side wall 50d. Step 1 includes running the third fastener 1113 through the fifth connecting hole 1114 and the fourth connecting hole 502 and connecting the second wall 112 to the fourth side wall 50d.

In an embodiment, step 2 specifically includes: running the first electrical connection portion 100b through the fourth opening 51, running the second electrical connection portion 100c through the fifth opening 52 and the sampling wire harness 100a through the sixth opening 53, and then injecting the fourth insulator into the fourth opening 51, the fifth opening 52, and the sixth opening 53 to seal the first heat sink 50.

Referring to FIG. 5, FIG. 41, and FIG. 42, in an embodiment, step 3 specifically includes: placing the first housing 11 upside down and injecting the first insulator 60 into the first housing 11. Further, the first insulator 60 is injected into the first housing 11 through the second passage 221b, and the first insulator 60 flows to the first heat sink 50 and fills the first spacing 104, the second spacing 105, the third spacing 107, and the fourth spacing 109, so that the first insulator 60 covers the first structural member 40, the first circuit board 30, and the welding portion 212a. Then, the fifth wall 115 is mounted and connected to the first wall 111, the second wall 112, the third wall 113, and the fourth wall 114.

Referring to FIG. 9, FIG. 10, and FIG. 22, in an embodiment, step 4 specifically includes: mounting the second circuit board 13 on the second housing 12, bending the first electrical connection portion 100b and the second electrical connection portion 100c, connecting the first electrical connection portion 100b to the first connecting portion 131, connecting the second electrical connection portion 100c to the second connecting part 132, and then connecting the second housing 12 to the first housing 11, to complete assembly of the battery pack 100. Further, step 4 further includes injecting the third insulator 123 to between the second circuit board 13 and the second housing 12 to cover the second circuit board 13.

Those of ordinary skill in the art should appreciate that the foregoing embodiments are for description of this application only but not for limiting this application. Appropriate modifications and variations made to the embodiments without departing from the essential spirit and scope of this application all fall within the scope of this application.

## Claims

1. A battery pack, comprising:
a housing assembly;
a cell assembly disposed in the housing assembly and comprising a cell; wherein the cell comprises a cell housing, an electrode assembly disposed in the cell housing, and an electrode terminal connected to the electrode assembly and led out from the cell housing;
a first circuit board disposed in the housing assembly and connected to the electrode terminal;
a first heat sink disposed in the housing assembly;
a first structural member disposed between the first circuit board and the first heat sink, an outer surface of the first structural member is provided with an insulating material; and
a first insulator, wherein at least a part of the first insulator is disposed between the first structural member and the first heat sink, and the first structural member and the first heat sink are bonded by the first insulator.

2. The battery pack according to claim 1, wherein the first insulator is formed by a solidified fluid insulating material injected into the battery pack.

3. The battery pack according to claim 1, wherein the housing assembly, the cell assembly, the first circuit board, the first structural member, and the first heat sink are bonded by the first insulator.

4. The battery pack according to claim 1, wherein the first insulator covers a part of the electrode terminal outside the cell housing.

5. The battery pack according to claim 1, wherein the cell housing comprises a first section and a second section, the first section accommodates the electrode assembly, the second section is connected to the first section, the electrode terminal extends out of the second section, and the first insulator covers at least a part of the second section.

6. The battery pack according to claim 1, wherein the housing assembly is provided with a first through-hole and a second through-hole, and the first heat sink is provided with a first passage communicating with the first through-hole and the second through-hole.

7. The battery pack according to claim 1, wherein the first heat sink is provided with a first insulation portion, the first insulation portion being disposed between an inner surface of the housing assembly and the first heat sink.

8. The battery pack according to claim 6, wherein the housing assembly comprises a first housing, the first housing encloses a first space, and the first heat sink is disposed in the first space;
the first housing comprises a first wall, a second wall, a third wall, and a fourth wall; the first wall and the second wall are opposite to each other in a first direction, the third wall and the fourth wall are opposite to each other in a second direction, and the first heat sink is connected to inner surfaces of the first wall, the second wall, the third wall, and the fourth wall.

9. The battery pack according to claim 8, wherein the first through-hole is provided on the first wall and the second through-hole is provided on the second wall.

10. The battery pack according to claim 9, wherein the cell assembly comprises a plurality of cells, and the plurality of cells are stacked along the first direction.

11. The battery pack according to claim 9, wherein the third wall is provided with a first region, the first region is provided with a first housing insulator, and the third wall and the first heat sink are bonded by the first housing insulator; and
the fourth wall is provided with a second region, the second region is provided with a second housing insulator, and the fourth wall and the first heat sink are bonded by the second housing insulator.

12. The battery pack according to claim 9, wherein the battery pack further comprises a first insulation portionand a second insulation portion, the first insulation portionand the second insulation portion being compressible;
along the first direction, the first insulation portionis disposed between the first wall and the first heat sink, and the first insulation portionis in a compressed state;
along the first direction, the second insulation portion is disposed between the second wall and the first heat sink and the first insulation portionis in a compressed state.

13. The battery pack according to claim 12, wherein the first insulation portioncomprises foam, a surface of the foam attached to the first heat sink and the first wall is provided with adhesive and capable of being bonded to the first heat sink and the first wall.

14. The battery pack according to claim 12, wherein the second insulation portion comprises foam, wherein a surface of the foam attached to the first heat sink and the second wall is provided with adhesive and capable of being bonded to the first heat sink and the second wall.

15. The battery pack according to claim 8, further comprising a connecting bracket, wherein the housing assembly further comprises a second housing, a second circuit board is disposed in the second housing, the first housing and the second housing are connected to the connecting bracket, and the connecting bracket is disposed between the second circuit board and the first heat sink.

16. The battery pack according to claim 15, wherein the connecting bracket is provided with a bracket through-hole, a second space is formed between the connecting bracket and the first heat sink, and the bracket through-hole communicates with the second space.

17. A battery pack, comprising:
a housing assembly;
a cell assemblydisposed in the housing assembly and comprising a plurality of cells; wherein each cell comprises a cell housing, an electrode assembly disposed in the cell housing, and an electrode terminal connected to the electrode assembly and led out from the cell housing, the electrode terminal comprises a welding portion, and welding portions of adjacent cells overlap;
a first circuit board disposed in the housing assembly and connected to the welding portion;
a first heat sink connected to an inner surface of the housing assembly, wherein the first circuit board and the first heat sink are arranged along a third direction;
a first structural member disposed between the first circuit board and the first heat sink, wherein an outer surface of the first structural member is provided with an insulating material, and the first structural member is provided with a fourth communicating hole;
along the third direction, a projection of a part of the welding portions of adjacent cells and a projection of the fourth communicating hole overlap; and
a first insulator, at least partially located between the first structural member and the first heat sink and at least partially disposed in the fourth communicating hole.

18. The battery pack according to claim 17, wherein a fluid insulating material flows in between the first structural member and the first heat sink through the fourth communicating hole and forms the first insulator.

19. The battery pack according to claim 17, wherein the first circuit board is further provided with a plurality of first communicating holes, the first communicating holes run through the first circuit boar along the third direction, and the first communicating holes allow the first insulator to flow into the battery pack.

20. The battery pack according to any one of claims 17 to 19, wherein the electrode terminal comprises a first terminal and a second terminal, the first terminal and the second terminal being opposite in polarity, wherein one of the first terminal or the second terminal is a positive electrode terminal and the other one is a negative electrode terminal; and
the first circuit board is provided with a plurality of sets of holes, each set of holes comprises a first hole and a second hole, the first hole and the second hole being arranged along a first direction, the first hole and the second hole extend along a second direction; a first terminal of one of adjacent cells runs through the first hole and a second terminal of the other one of the adjacent cells runs through the second hole, and a welding portion of the first terminal and a welding portion of the second terminal are stacked and then connected to the first circuit board, the first direction is perpendicular to both the second direction and the third direction.

21. The battery pack according to claim 20, wherein the first circuit board is provided with a plurality of first conductive sheets, the first conductive sheet being connected to the first circuit board and disposed along the first hole and the second hole, a first terminal of one of the adjacent cells runs through the first hole and a second terminal of the other one of the adjacent cells runs through the second hole, and a welding portion of the first terminal and a welding portion of the second terminal are stacked and then welded to the first conductive sheet.

22. The battery pack according to claim 21, wherein each set of holes further comprises a third hole, when viewed along the third direction, the third hole is located between the first hole and the second hole;
a projection of the third hole along the third direction is located within a projection of the first conductive sheet along the third direction.

23. The battery pack according to claim 20, wherein the housing assembly is provided with a first through-hole and a second through-hole, and the first heat sink is provided with a first passage communicating with the first through-hole and the second through-hole.

24. The battery pack according to claim 19, wherein the projection of the fourth communicating hole along the third direction and the projection of the first communicating hole along the third direction are spaced from each other.

25. An electric device, comprising the battery pack according to any one of claims 1 to 16 or any one of claims 17 to 24.

26. A method for manufacturing the battery pack according to any one of claims 1 to 16 or any one of claims 17 to 24, comprising the following steps:
mounting the cell, the first circuit board, and the first heat sink in the first housing, and connecting the first heat sink to the first housing;
injecting a fourth insulator into an opening of the first heat sink to seal the first heat sink;
placing the first housing upside down after the fourth insulator is solidified and injecting the first insulator; and
after the first insulator is solidified, connecting a first electrical connection portion to a second circuit board and mounting a second housing on the first housing.

27. The method for manufacturing the battery pack according to claim 26, wherein the step of mounting a second housing on the first housing further comprises injecting a third insulator to between the second circuit board and the second housing to cover the second circuit board.
